# EUROPÄISCHE PATENTSCHRIFT

(11) **EP 3 420 243 B1**
(45) Veröffentlichungstag und Bekanntmachung des Hinweises auf die Patenterteilung: **22.04.2020**
(21) Anmeldenummer: 17706458.1
(22) Anmeldetag: 21.02.2017
(51) Int. Cl.: F16D 69/04, F16D 65/092

(54) **BREMSBELAG EINER SCHEIBENBREMSE UND BREMSBELAGSATZ**
BRAKE LINING OF A DISK BRAKE AND BRAKE PAD SET
GARNITURE DE FREIN À DISQUE ET JEU DE GARNITURES DE FREIN

(30) Priorität: 26.02.2016 DE 102016103396
(43) Veröffentlichungstag der Anmeldung: 02.01.2019
(73) Patentinhaber: KNORR-BREMSE Systeme für Nutzfahrzeuge GmbH, 80809 München (DE)
(72) Erfinder: DRESEN, Dirk, 51375 Leverkusen (DE); SCHROPP, Josef, 94428 Eichendorf (DE); PAHLE, Wolfgang, 83707 Bad Wiessee (DE)
(86) Internationale Anmeldenummer: PCT/EP2017/053887
(87) Internationale Veröffentlichungsnummer: WO 2017/144441

(56) Entgegenhaltungen:
- EP-A1- 2 083 187
- DE-A1-102006 034 764
- DE-C1- 19 532 019
- US-A- 5 355 986
- US-A1- 2013 277 160
- US-B1- 6 367 600

## Beschreibung

Die vorliegende Erfindung betrifft einen Bremsbelag einer Scheibenbremse nach dem Oberbegriff des Anspruchs 1. Die Erfindung bezieht sich auch auf einen Bremsbelagsatz für eine Scheibenbremse.

Derartige Bremsbeläge werden in Scheibenbremsen verwendet. Die Scheibenbremsen werden insbesondere in Nutzfahrzeugen eingesetzt und sind häufig mit pneumatischer Betätigung versehen. Eine Ausführung des Bremssattels derartiger Scheibenbremsen ist als Schiebesattel ausgebildet und wird z.B. bei engem Bauraum verwendet.

Es besteht bei Fahrzeugen eine ständige Forderung nach Kraftstoffeinsparung. Hierbei liegt eine Möglichkeit darin, das Gewicht einer Scheibenbremse zu reduzieren, da diese Scheibenbremse an allen Rädern eines Fahrzeugs vorhanden ist.

Hierzu sind bereits viele Vorschläge gemacht. Einige Beispiel zur Illustration sind im Folgenden genannt. DE 10 2011 118 127 B4 beschreibt einen Bremsbelag mit einem biegesteifen Kern. EP 2 459 898 B1 betrifft einen Bremsbelag mit einer als Gussteil ausgebildeten Belagträgerplatte, die erhabene, angeformte, von einer Reibmasse zu dessen Halterung umschlossene Formschlussteile aufweist. In EP 0 731 288 B1 ist ein Verfahren zur Herstellung eines Bremsbelags durch Ausbildung von Vorsprüngen angegeben. DE 10 2008 003 529 B4 beschreibt einen Bremsbelag für eine Scheibenbremse mit Rippen und Formmitteln, die mit der Reibmasse im Sinne eines Formschlusses korrespondieren.

Die WO 97/06370 A zeigt verschiedene Ausführungsvarianten eines Belagrückenträger in welchen entweder Vertiefungen oder Erhebungen belagseitig auf der Oberfläche der Belagrückenplatte ausgebildet sind. Problematisch erscheint dabei die Verankerung der Reibmasse auf der Belagrückenplatte. So werden in vielen Darstellungen Stege mit Hinterschnitten oder Erhebungen mit seitlichen Hinterschneidungen dargestellt. Insbesondere die Dimensionierung der Stege erscheint sehr dünn, so dass sie Seitenkräften und Schwerkräften nur wenig Widerstand entgegen bringen können.

Aus der US 2013/277160 A1 offenbart eine Rückenplatte eines Bremsbelags einer Scheibenbremse welcher in Fig. 4c Flächenfelder als Vertiefungen aufweist, die randseitig teilweise von Stegen begrenzt werden.

Die EP 1 982 091 B1 offenbart einen Bremsbelag mit einer Belagrückenplatte mit einer Strukturanordnung welche durch eine Vertiefung gebildet ist in welcher eine Vielzahl von Erhebungen mit gleicher Form und Geometrie angeordnet sind. Dieser Bremsbelag hat sich an sich bewährt, allerdings soll die Stabilität und Festigkeit der Verbindung der Belagrückenplatte mit der Reibmasse zusätzlich erhöht werden. Vor dem Hintergrund dieser Lösungen besteht weiterhin ein ständiger Bedarf nach Kraftstoffeinsparung durch Gewichtsreduzierung bei gleichzeitig verlängerter Standzeit von Bremsen und Bremsenbauteilen ohne Verringerung von Festigkeit und Stabilität.

Der Erfindung liegt daher die Aufgabe zu Grunde, einen verbesserten Bremsbelag für eine Scheibenbremse anzugeben.

Eine weitere Aufgabe ist es, einen verbesserten Bremsbelagsatz für eine Scheibenbremse bereitzustellen.

Die Erfindung löst diese Aufgabe durch den Gegenstand der Ansprüche 1 und 15.

Demgemäß umfasst ein Bremsbelag einer Scheibenbremse für ein Kraftfahrzeug, insbesondere für ein Nutzfahrzeug, eine Belagrückenplatte, die eine Belagseite mit einer Reibmasse und eine der Belagseite gegenüberliegende Zuspannseite aufweist, wobei die Belagseite mit einer Strukturanordnung mit einer Mehrzahl von Ausnehmungen und darin angeordneten Erhebungen versehen ist. Die Strukturanordnung der Belagseite umfasst in Form und Größe unterschiedliche Strukturelemente.

Vorzugsweise sind die Ausnehmungen und Erhebungen Teil der Strukturelemente der Strukturanordnung.

Es hat sich gezeigt, dass die Stabilität gegenüber Seiten- und Scherkräften im Vergleich zur WO 97/06370 A und zur EP 1 982 091 B1 zunimmt wenn man eine Mehrzahl von Vertiefungen mit darin angeordneten Erhebungen vorsieht, wobei die Strukturelemente, insbesondere die Vertiefungen und/oder Erhebungen, in Form und Größe variieren.

Da die Reibmasse in ihrer Dichte, Fläche und Dicke nur wenig variabel ist, wenn man eine vorbestimmte Bremswirkung und Standzeit erzielen will, besteht der Vorteil darin, dass eine Gewichtsreduktion durch die Strukturelemente an der Belagrückenplatte ermöglicht wird. Da diese in Form und Größe nicht nur unterschiedlich erstellt werden, sondern auch an entsprechender Stelle in bestimmter Anordnung platziert werden, können die Festigkeit und somit die Standzeit erhalten bleiben. Zudem ergibt sich der Vorteil einer Kostenverringerung durch Materialeinsparung. Erfindungsgemäß sind ist eine erste Gruppe oder es sind sämtliche der in Form und Größe unterschiedlichen Strukturelemente in zwei geraden Reihen, welche parallel zu einer Längsrichtung der Belagrückenplatte verlaufen, und in einer um diese Reihen umlaufenden Anordnung angeordnet. Die Anordnung und die Form und Größe richtet sich nach einem ermittelten Kraftverlauf in der Belagrückenplatte.

In weiterer Ausführung sind die Strukturelemente in den zwei geraden Reihen und in der um diese Reihen umlaufenden Anordnung in einer zu einer Achse, die senkrecht zu der Längsrichtung der Belagrückenplatte verläuft, symmetrischen Anordnung angeordnet. Damit ist sowohl eine dem auftretenden Kraftverlauf wie auch auftretenden Anregungsfrequenzen in Bezug auf Schwingungsverhalten geräuschoptimierte Formung und Anordnung möglich.

Es ist erfindungsgemäß vorgesehen, dass die eine Reihe drei sechseckförmige Wabenstrukturelemente nebeneinander aufweist, wobei in der darunter liegenden Reihe zumindest zwei weitere Wabenstrukturelemente so angeordnet sind, dass sich eine Art Wabenstruktur ergibt. Dabei sind Verbindungsstege unter den Wabenstrukturelementen gebildet, welche als Verstärkungsrippen dienen können.

Die in Form und Größe unterschiedlichen Strukturelemente können alternativ oder zusätzlich in zwei Gruppen, die symmetrisch zu einer Achse, die senkrecht zu der Längsrichtung der Belagrückenplatte verläuft, auf der Belagseite der Belagrückenplatte angeordnet sein. Dies ist vorteilhaft, da so eine möglichst symmetrische Kraftverteilung möglich ist.

Es ist in einer noch weiteren Ausführung vorgesehen, dass weitere Strukturelemente der in Form und Größe unterschiedlichen Strukturelemente in Randbereichen, in der Mitte und in Auflagerbereichen der Bremsbelagrückenplatte vorgesehen sind. Damit werden Bereiche versteift, in denen ein hoher Kraftverlauf auftreten kann.
In einer anderen Ausführung weisen die Strukturelemente weiterhin fünfeckige, viereckige und dreieckige Formen mit abgerundeten Ecken auf. Da es keine scharfkantigen Ecken gibt, können Kraftverlaufsprünge mit entsprechenden Kraftspitzen vermieden werden.

Wenn die Erhebungen kreisrund, oval oder/und mehreckig, z.B. dreieckig, ausgebildet sind und Vertiefungen aufweisen, kann sowohl eine Festigkeit verbessert und eine Verbindung zu der Reibmasse intensiviert werden.

Dazu kann es auch vorteilhaft sein, dass die Erhebungen bis zur Höhe eines jeweiligen Rands von einem Boden einer jeweiligen Ausnehmung oder/und über den jeweiligen Rand hinaus hervorstehen. Dies ergibt einen weiten Anpassungsbereich an unterschiedliche Einsatzbereiche.

In einer Ausführung weist die Zuspannseite der Belagrückenplatte hervorstehende Druckabschnitte auf. Damit lässt sich eine vorteilhafte Krafteinleitung durch eine Zuspanneinrichtung ermöglichen, insbesondere wenn die hervorstehenden Druckabschnitte keine scharfen Kanten sondern gerundete Übergänge aufweisen.

Eine weitere Erhöhung von Festigkeit und Lebensdauer kann sich ergeben, wenn die von der Zuspannseite hervorstehenden Druckabschnitte durch zumindest einen Stegabschnitt verbunden sind. Der Verlauf der Stegabschnitte kann einem ermittelten Kraftverlauf vorteilhaft angepasst werden, z.B. in einer Ausführung, in welcher der zumindest eine Stegabschnitt geradlinig und parallel zu einer Längsrichtung der Belagrückenplatte verläuft. So sind aber auch bogenförmige Verläufe möglich.

Wenn die Druckabschnitte kreisringförmig mit einer Ausnehmung ausgebildet sind, kann weiteres Gewicht eingespart werden.

In einer anderen Ausführung sind die Druckabschnitte jeweils in zwei halbkreisförmige Ringsegmentdruckabschnitte aufgeteilt, in deren Mitte jeweils eine kreisförmige Vertiefung eingeformt ist, welche beidseitig jeweils mit einer geradlinigen Vertiefung zwischen den zugehörigen Ringsegmentdruckabschnitten kommuniziert. Hierbei ergibt sich eine weitere Gewichtsreduzierung bei gleichzeitiger Beibehaltung der Festigkeit.

Für einen angepassten vorteilhaften Kraftverlauf können die geradlinigen Vertiefungen in einer gedachten geraden Verbindungslinie in Längsrichtung der Belagrückenplatte durch Mittelpunkte der Ringsegmentdruckabschnitte verlaufen.

In einer noch anderen Ausführung weist die Zuspannseite Anlageleistenabschnitte und Auflageleistenabschnitte auf. Damit ist es möglich, diese Bereiche zu versteifen und auch gleichzeitig Anlageflächen und Auflagefläche zu vergrößern, d.h. eine Überleitung von auftretenden Kräften zu verbessern.

Für eine weitere vorteilhafte Verstärkung und Kraftverteilung können die Anlageleistenabschnitte mit den Druckabschnitten oder den Ringsegmentdruckabschnitte verbunden sein.

Es ist vorteilhaft, wenn die Belagrückenplatte einstückig aus einem metallischen Guss hergestellt ist, da somit Zusatzteile, die nachträglich angesetzt werden müssten, entfallen können.

Ein Bremsbelagsatz für eine Scheibenbremse für ein Fahrzeug, insbesondere für ein Nutzfahrzeug umfasst mindestens einen zuspannseitigen Bremsbelag und mindestens einen rückenseitigen Bremsbelag, wobei der zuspannseitige Bremsbelag wie der oben beschriebene Bremsbelag ausgebildet ist.

Nachfolgend werden die Stege der Strukturanordnung näher charakterisiert. Diese sollten idealerweise einen guten Widerstand gegenüber Seitenkräfte aufweisen und zugleich jedoch auch eine gute Möglichkeit zur Verankerung der Reibmasse aufweist. Zugleich sollte die Dimensionierung zu einer Gewichtsverringerung des Bremsbelags beitragen. Weiterhin soll ein Abscheren der Reibmasse durch eine möglichst große Oberfläche verhindert werden. Die nachfolgenden Ausgestaltungsvarianten bringen einzeln oder in Kombination hierbei weitergehende Optimierungen.

Es ist von Vorteil wenn das Verhältnis x/y zumindest 0,25, vorzugsweise zwischen 0,3 bis 0,6, beträgt, wobei x die Tiefe einer Ausnehmung der Strukturanordnung, vorzugsweise aller Ausnehmung der Strukturanordnung ist bzw. die Höhe mit welcher Stege der Strukturanordnung aus den Ausnehmungen hervorstehen und y die Dicke der Belagrückenplatte ist.

Die Dicke der Belagrückenplatte kann vorzugsweise 6 mm betragen bei einer Höhe der Stege bzw. einer Tiefe der Ausnehmungen von 2,5 mm.

Da die Belagrückenplatte Vorsprünge, Vertiefungen, Erhebungen, Ausnehmungen und dergleichen aufweisen kann, ist die Dicke der Belagrückenplatte durch die zuspann- und belagseitigen Oberflächen definiert, welche den Großteil des randseitigen Bereichs außerhalb der Strukturanordnung bilden.

Die Breite von zumindest 50% aller Stege der Strukturanordnung, insbesondere von zumindest 50% aller Stege mit einheitlicher Länge, zumindest 1,8 mm, vorzugsweise 2-4 mm beträgt.

Die Länge von zumindest 50% aller Stege der Strukturanordnung, insbesondere von zumindest 50% aller Stege der Strukturanordnung mit einheitlicher Breite, kann vorteilhaft zumindest 7 mm, vorzugsweise 8-17 mm betragen. Die Länge eines Steges wird dabei ausgehend von den Kreuzungspunkten der Längsachse des jeweiligen Steges mit den Längsachsen von weiteren Stegen ermittelt.

Zumindest 50% der Stege können entlang eines Abschnitts von zumindest 50% ihrer Haupterstreckungsrichtung eine Breite aufweisen, welche zwischen 150 bis 300% der Dicke der Belagrückenplatte und/oder zwischen 70-130% der Tiefe der Ausnehmung beträgt.

Die Länge von zumindest 50% aller Stege kann entlang ihrer Haupterstreckungsrichtung zwischen 120% bis 300% der Dicke der Belagrückenplatte und/oder zwischen 250% und 700 % der Tiefe der Ausnehmung betragen.

Vorteilhaft können zumindest 50% aller Stege eine einheitliche Länge aufweisen.

Die Anzahl an Strukturelemente kann mehr als 8 pro 100 cm² Reibfläche, vorzugsweise mehr als 10, betragen.

Weiterhin sind nachfolgend die Form der Ausnehmungen und die Form der vorzugsweise in den Ausnehmungen angeordneten Erhebungen näher erläutert.

Die Strukturelemente sind als die Ausnehmungen ausgebildet sind, wobei die Ausnehmungen die Erhebungen aufweisen, welche in einer Draufsicht senkrecht zur Ebene der Oberfläche der Belagrückenplatte zwischen 15 bis 50 %, insbesondere zwischen 20 bis 30% der Fläche der Ausnehmung einnehmen.

Die Ausnehmung können vorteilhaft eine maximale Tiefe t1 aufweist, mit welcher sie gegenüber der Ebene der Oberfläche abgesenkt ist, wobei maximale Tiefe zwischen 20 bis 60%, insbesondere zwischen 30 bis 50%, der Dicke der Belagrückenscheibe beträgt.

Die Erhebungen können vorteilhaft eine Höhe aufweisen mit welcher sie aus der Bodenfläche der Ausnehmung, vorzugsweise senkrecht, hervorstehen, wobei die Höhe zwischen 80% bis 180%, insbesondere 120 % bis 165 % der Tiefe beträgt.

Nachfolgend wird die Ausgestaltung der Zuspannseite näher erörtert.

Ein Stegabschnitt auf der Zuspannseite kann als erster Stegabschnitt zwischen den Druckabschnitten verlaufen mit einer Stegbreite welche zwischen 40 % bis 55 % eines Außenradius eines der Druckabschnitte beträgt.

Ein zweiter Stegabschnitt kann zudem vorteilhaft zwischen den Druckabschnitten verlaufen und spiegelsymmetrisch zum ersten Stegabschnitt, bezogen auf eine gedachte Mittelachse M, angeordnet sein. Dadurch kann eine höhere mechanische Stabilität erreicht werden.

Der zweite Stegabschnitt kann vorteilhaft eine Breite von zumindest 90%, vorzugsweise zwischen 95 bis 105%, des ersten Stegabschnitts zur Erhöhung der Stabilität aufweisen.

Die Oberfläche der Belagseite der Bremsbelagrückenplatte kann vorteilhaft einen um die Strukturordnung umlaufenden Randbereich ausbilden.

Der Randbereich an allen Abschnitten kann vorteilhaft eine Mindestbreite von zumindest 3 mm, vorzugsweise 4-12 mm, aufweisen.

Zumindest eine Erhebung, insbesondere zumindest 50% aller Erhebungen, der Strukturanordnung können jeweils zumindest eine Vertiefung, insbesondere eine zentrisch in der Erhebung angeordnete Vertiefung, aufweisen. Dadurch wird die Verankerung der Reibmasse verbessert.

Vorteilhaft kann jede Erhebung die geometrische Form der jeweiligen Ausnehmung aufweisen, in welcher die Erhebung angeordnet ist. Dies kann bevorzugt derart erfolgen, dass die Erhebung in einem gleichbleibenden Abstand vom Rand der Ausnehmung beabstandet ist.

In jeder Ausnehmungen sind maximal zwei Erhebungen, vorzugsweise jedoch ist maximal eine Erhebung, angeordnet.

Anders als in der WO 97/06370 A, in welcher entweder nur sehr wenige Stege und Ausnehmungen gezeigt sind oder in aber Stege welche sehr schmal ausgebildet sind, können die Ausnehmungen vorteilhaft weniger als 85%, vorzugsweise zwischen 55 - 80%, und besonders vorteilhaft zwischen 70-78% der Fläche der Strukturanordnung in der Draufsicht auf die Belagseite einnehmen. Der Rest der Fläche entfällt auf die Stege, also deren Stirnflächen. Sofern Randflächen der Ausnehmungen in der zweidimensionalen Draufsicht sichtbar sind, so werden diese den Ausnehmungen zugeordnet. In der Draufsicht werden zusätzliche Flächen, welche sich durch Höhenunterschiede und aufgrund des dreidimensionalen Aufbaus der Belagrückenplatte ergeben, weggelassen sondern nur die zweidimensionale Fläche der Belagsseite betrachtet welche bei Ansicht in Zuspannrichtung darstellt.

Die Ausnehmungen können dabei weniger als 90%, vorzugsweise zwischen 70 - 88%, insbesondere zwischen 80-85% der Fläche der Belagrückenplatte in der Draufsicht auf die Belagseite einnehmen.

Die Strukturanordnung kann mehr als 65%, vorzugsweise zwischen 68% bis 75% der Fläche der Belagrückenplatte in der Draufsicht auf die Belagseite einnehmen. Der Rest der Fläche der Belagrückenplatte entfällt auf einen Randbereich, welcher entsprechend für eine zusätzliche Stabilität der Belagrückenplatte sorgt.

Zur optimalen Abstimmung auf einwirkende Querkräfte können die Erhebungen zumindest zwei unterschiedliche geometrische Formen und/oder Dimensionierungen vorteilhaft aufweisen.

Die Symmetrie der geometrischen Form einer ersten Erhebung unterschiedlich ist von der Symmetrie der geometrischen Form einer zweiten Erhebung, wobei beide Erhebungen Teil der Strukturanordnung sind.

So können die Erhebungen eine unterschiedliche Breite, parallel zur Plattenebene, aufweisen.

Die Erhebungen können rotationssymmetrisch oder achssymmetrisch vorliegen. Im Fall von eckigen Erhebungen sind dies achssymmetrische Erhebungen und im Fall von zylindrischen Erhebungen sind dies rotationssymmetrische Erhebungen. Entsprechend können auch die in den Erhebungen vorgesehenen Vertiefungen vorteilhaft unterschiedliche Dimensionierung und/oder Geometrie aufweisen.

Die Erhebungen haben, anders als Stege, keine Verbindung mit dem Rand der Ausnehmung. Daher weist eine jede Erhebung einem Mindest-Abstand vom einem die Ausnehmung begrenzenden Rand auf.

Dieser Mindest-Abstand kann vorzugsweise zumindest 50%, besonders bevorzugt 80-400%, der Tiefe der Ausnehmung betragen
Nachfolgende Varianten eines Bremsbelags sind im Rahmen der vorliegenden Erfindung im Besonderen hervorzuheben:
Ein erster erfindungsgemäßer Bremsbelag einer Scheibenbremse für ein Kraftfahrzeug, insbesondere für ein Nutzfahrzeug, nach Anspruch 1, weist eine Belagrückenplatte auf, die eine Belagseite mit einer Reibmasse und eine der Belagseite gegenüberliegende Zuspannseite aufweist, wobei die Belagseite mit einer Strukturanordnung mit Ausnehmungen und Erhebungen versehen ist, zur formschlüssigen Verbindung mit dem Reibmaterial. Der erste erfindungsgemäße Bremsbelag ist dabei ausgelegt für Scheibenbremsen mit einem Bremsmoment von maximal 30 kNm, wobei der Bremsbelag eine Reibfläche von mehr als 180 cm², insbesondere 189 cm², und ein Gewicht der Belagrückenplatte von weniger als 1100 g, insbesondere von 1050 g, aufweist.

Der zweite erfindungsgemäße Bremsbelag ist ausgelegt für Scheibenbremsen mit einem Bremsmoment von maximal 24 kNm, wobei der Bremsbelag eine Reibfläche von mehr als 160 cm² ,insbesondere 164 cm², und ein Gewicht der Belagrückenplatte von weniger als 1050 g, insbesondere 1000 g, aufweist.

Der dritte erfindungsgemäße Bremsbelag ist ausgelegt für Scheibenbremsen mit einem Bremsmoment von maximal 20 kNm. Die Reibfläche des Bremsbelags beträgt mehr als 155 cm², insbesondere 161 cm², und das Gewicht der Belagrückenplatte beträgt weniger als 1050 g, insbesondere 1000 g.

Der vierte erfindungsgemäße Bremsbelag ist ausgelegt ist für Scheibenbremsen mit einem Bremsmoment von maximal 19 kNm und weist eine Reibfläche von mehr als 150 cm² ,insbesondere 154-161 cm², und ein Gewicht der Belagrückenplatte von weniger als 1050 g, insbesondere 1000 g, auf.

Der vierte erfindungsgemäße Bremsbelag ist ausgelegt für Scheibenbremsen mit einem Bremsmoment von maximal 19 kNm und weist eine Reibfläche des Bremsbelags von mehr als 140 cm², insbesondere 142,5 cm², und ein Gewicht der Belagrückenplatte von weniger als 1000 g, insbesondere 950 g, auf.

Der fünfte erfindungsgemäße Bremsbelag ist ausgelegt für Scheibenbremsen mit einem Bremsmoment von maximal 13 kNm und weist eine Reibfläche des Bremsbelags von mehr als 110 cm², insbesondere 115 cm², und ein Gewicht der Belagrückenplatte von weniger als 950 g, insbesondere 900 g, auf.
Der sechste Bremsbelag ist ausgelegt für Scheibenbremsen mit einem Bremsmoment von maximal 30 kNm und weist eine Reibfläche des Bremsbelags von mehr als 185 cm², insbesondere 200,7 cm², und ein Gewicht der Belagrückenplatte von weniger als 1250 g, insbesondere 1200 g, auf.

Die vorgenannte Reibfläche in den erfindungsgemäßen Bremsbelägen bezieht sich auf eine Fläche bei mittlerem Verschleiß, also wenn der Belag zur Hälfte verschlissen ist.

Alle vorgenannten Bremsbeläge beruhen auf der einheitlichen erfinderischen Idee der Schaffung eines Bremsbelags mit reduziertem Gewicht durch Vorsehen einer Strukturanordnung. Je nach erforderlichen Bremsmomenten und Reibflächen sind andere Gewichte im Rahmen der vorliegenden Erfindung realisierbar.

In den Zeichnungen sind Ausführungsbeispiele eines erfindungsgemäßen Bremsbelags und eines erfindungsgemäßen Bremsbelagssatzes dargestellt und werden im Folgenden näher beschrieben, wobei auch weitere Vorteile erfindungsgemäßer Ausführungen erläutert werden. Es zeigen:
- Fig. 1: eine schematische Teilschnittansicht einer Scheibenbremse;
- Fig. 2: eine schematische Draufsicht auf eine Zuspannseite eines Ausführungsbeispiels einer Belagrückenplatte eines Bremsbelags;
- Fig. 3a, 3b: zwei Perspektivansichten der Belagrückenplatte der Fig. 2
- 3c-e: weitere Ansichten und Schnittansichten der Belagrückenplatten der Fig. 2;
- Fig. 4: eine schematische Ansicht einer Belagseite einer ersten Variante der Belagrückenplatte nach Fig. 2;
- Fig. 5: eine schematische Seitenansicht einer Anlagefläche der Belagrückenplatte aus Richtung IV nach Fig. 3;
- Fig. 6: eine schematische Schnittansicht längs Linie V-V der Belagrückenplatte aus Fig. 3;
- Fig. 7a: schematische Perspektivansicht der Belagrückenplatte der Fig. 4;
- Fig. 7b: schematische Perspektivansicht einer Abwandlung der Belagrückenplatte der Fig. 7a;
- Fig. 8 a - 8e: mehrere schematische Ansichten und Schnittansichten der Belagseite einer zweiten nicht erfindungsgemäßen Variante der Belagrückenplatte nach Fig. 3; und
- Fig. 9-13: schematische Ansichten der Zuspannseite weiterer Varianten der Belagrückenplatte nach Fig. 2.

Begriffe wie "oben", "unten", "rechts", "links" usw. beziehen sich auf Ausrichtungen und Anordnungen in den Figuren.

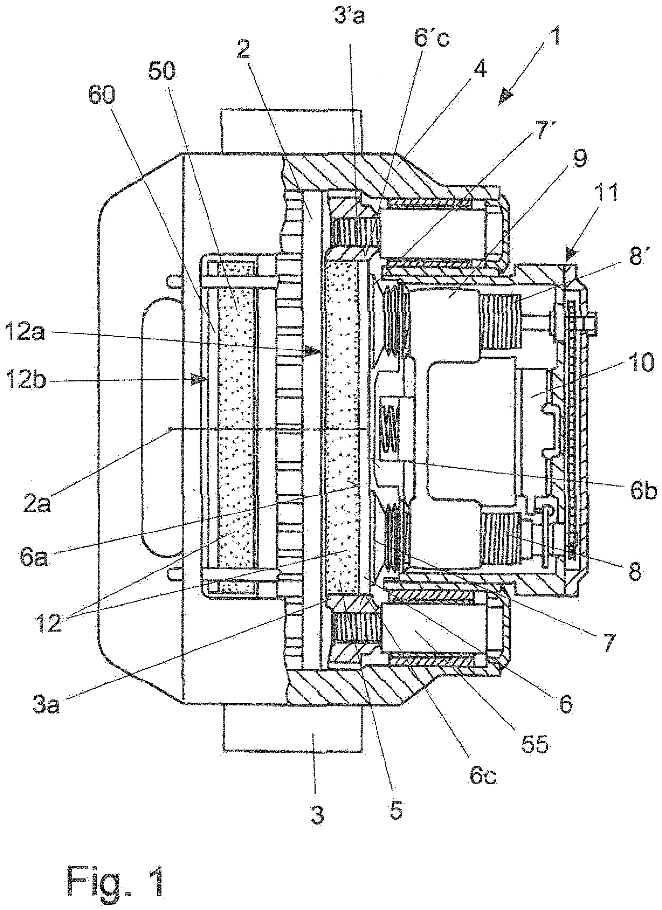

**Fig. 1** zeigt eine schematische Teilschnittansicht einer Scheibenbremse 1, beispielsweise eine pneumatische Scheibenbremse 1.

Die Scheibenbremse 1 ist z.B. Bestandteil der Bremsanlage eines Fahrzeugs, insbesondere eines Nutzfahrzeugs, und umfasst die Bremsscheibe 2 mit einer Bremsscheibendrehachse 2a, einen Bremsträger 3, einen Bremssattel 4, und einen Bremsbelagsatz 12 mit zwei Bremsbelägen 12a und 12b, die beiderseits der Bremsscheibe 2 angeordnet sind.

Die Bremsbeläge 12a, 12b werden mittels einer Zuspanneinrichtung 11, die in einem Abschnitt des Bremssattels 4 (in Fig. 1 auf der rechten Seite) angeordnet ist, bei einem Bremsvorgang mit einer Zuspannkraft beaufschlagt, wodurch sie an die Bremsscheibe 2 gepresst werden. In einem oder mehreren weiteren Abschnitten, vorzugsweise randseitig zur Zuspanneinrichtung 11, können eines oder mehrere Lager 55 zur axialen Verschiebbarkeit des Bremssattels gegenüber der Bremsscheibe angeordnet sein.

Die Zuspanneinrichtung 11 umfasst hier zwei Bremsstempel 8, 8', die in einer Traverse 9 eingeschraubt sind, und einen Bremsdrehhebel 10, der mit der Traverse 9 zur Überwindung des Arbeitshubes zusammenwirkt. Aufgrund der zwei Bremsstempel 8, 8' handelt es sich bei der Scheibenbremse 1 um eine zweistempelige Scheibenbremse 1. Die Bremsstempel 8, 8' wirken mit dem Bremsbelag 12a zusammen, welcher auch zuspannseitiger Bremsbelag 12a genannt wird. Der jeweilige Bremsstempel 8, 8' kann als justierbare Spindeleinheit mit jeweils zumindest einer Nachstellspindel ausgebildet sein. Der andere Bremsbelag 12b wird rückenseitiger Bremsbelag genannt. Hinsichtlich Aufbau und Funktionsweise einer druckluftbetätigten Scheibenbremse 1 wird auf das Dokument EP 0 566 008 A1 verwiesen.

Der zuspannseitige Bremsbelag 12a weist eine Reibmasse 5 und eine Belagrückenplatte 6 auf. Die Reibmasse 5 ist auf einer Belagseite 6a der Belagrückenplatte 6 aufgebracht und weist zur Bremsscheibe 2. Die andere Seite der Belagrückenplatte 6 wird hier als Zuspannseite 6b bezeichnet und weist zur Zuspanneinrichtung 11. Die Zuspanneinrichtung 11 steht jeweils mit einem Bremsstempel 8, 8' über jeweils ein Druckstück 7, 7' mit der Zuspannseite 6b der Belagrückenplatte 6 des zuspannseitigen Bremsbelags 12a in Kontakt.

Der zuspannseitige Bremsbelag 12a wird von der Zuspanneinrichtung 11 bei Bremsvorgängen mit einer Zuspannkraft in Richtung der Bremsscheibendrehachse 2a beaufschlagt. Der rückenseitige Bremsbelag 12b ist in einem nicht näher bezeichneten Rückenabschnitt des Bremssattels 4 aufgenommen und weist eine Reibmasse 50 und eine Belagrückenplatte 60 auf.

Die Bremsbeläge 12a, 12b sind in dem Bremsträger 5 jeweils in einem Belagschacht zwischen jeweils zwei Bremsträgerhörnern aufgenommen und in dem Bremsträger 5 gehalten. Dies wird im Folgenden für den zuspannseitigen Bremsbelag 12a näher beschrieben. Dabei ist der zuspannseitige Bremsbelag 12a mit seiner Belagrückenplatte 6 in dem Bremsträger 3 zwischen zwei Bremsträgerhörnern 3a und 3'a in Richtung der Bremsscheibendrehachse 2a verschiebbar gehalten. Die Bremsträgerhörner 3a, 3'a stehen von dem Bremsträger 3 senkrecht nach oben aus der Zeichenebene der Fig. 1 hervor. Die Belagrückenplatte 6 kontaktiert die Innenseiten der Bremsträgerhörner 3a, 3'a jeweils mit einer seitlichen Anlagefläche 6c, 6'c.

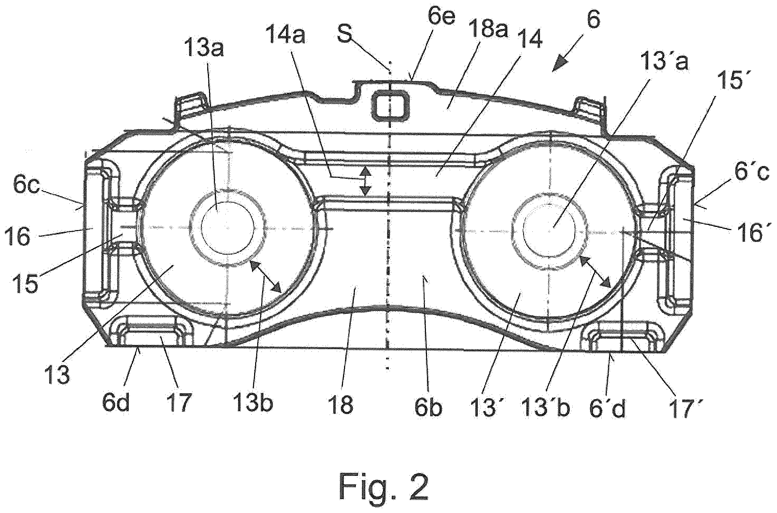

Der zuspannseitige Bremsbelag 12a steht mit Auflageflächen 6d, 6'd (siehe Fig. 2) mit entsprechend zugeordneten Auflagen in seinem Belagschacht in Kontakt. Ein nicht gezeigter Belaghaltebügel dient zur Halterung der Bremsbeläge 12a, 12b.

Zur besseren Orientierung wird hier angenommen, dass sich die Scheibenbremse 1 bei Vorwärtsfahrt des zugeordneten Fahrzeugs auf der Zeichenebene in Fig. 1 von unten nach oben bewegt. Dabei dreht sich die Bremsscheibe 2 um ihre Bremsscheibendrehachse 2a in einer Hauptdrehrichtung. Damit wird die in Fig. 1 unten liegende Seite des Bremssattels 4 als Einlaufseite und die oben liegende Seite des Bremssattels 4 als Auslaufseite bezeichnet. Entsprechend wird das Bremsträgerhorn 3a als einlaufseitiges Bremsträgerhorn 3a und das andere des Belagschachts des zuspannseitigen Bremsbelags 12a als auslaufseitiges Bremsträgerhorn 3'a bezeichnet. Wenn nicht anders angegeben werden im Folgenden Bauteile und Baugruppen, die der Auslaufseite zugeordnet sind, mit einem Apostroph an dem jeweiligen Bezugszeichen gekennzeichnet.

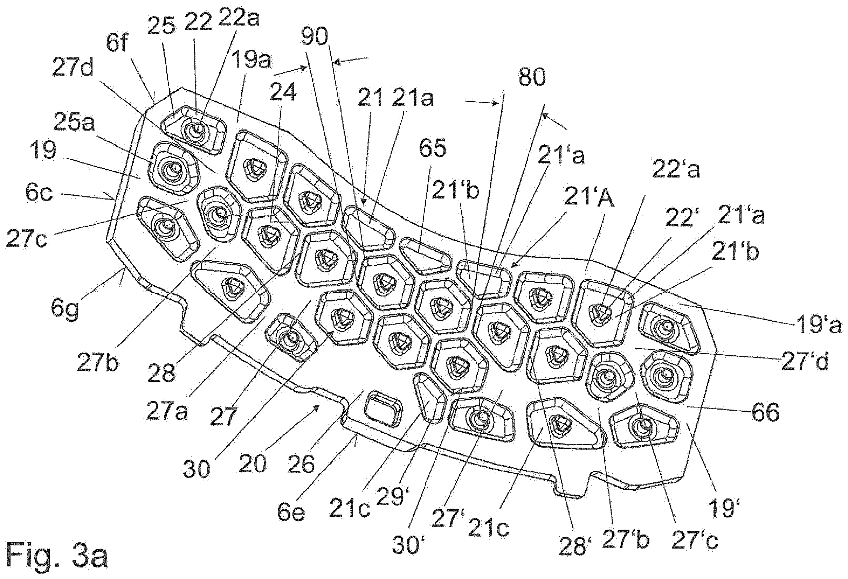

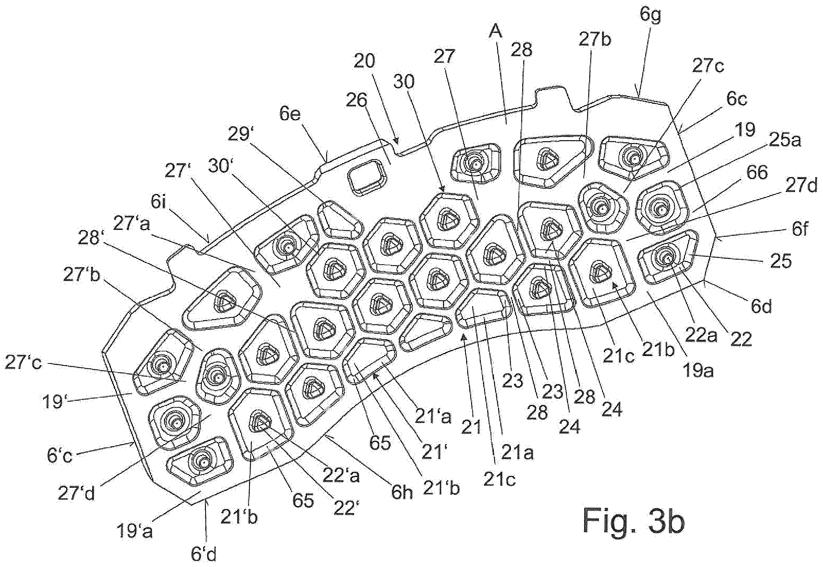

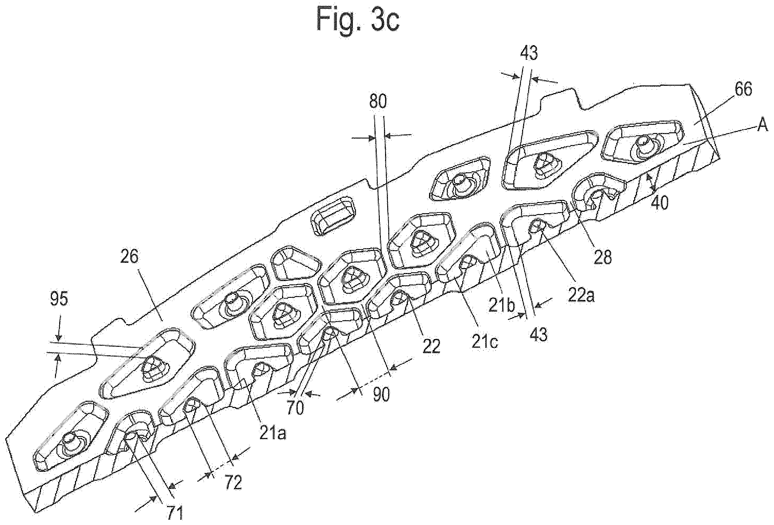

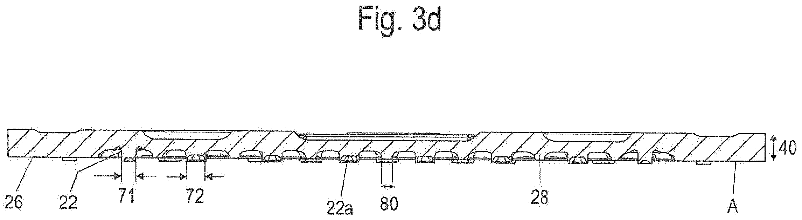

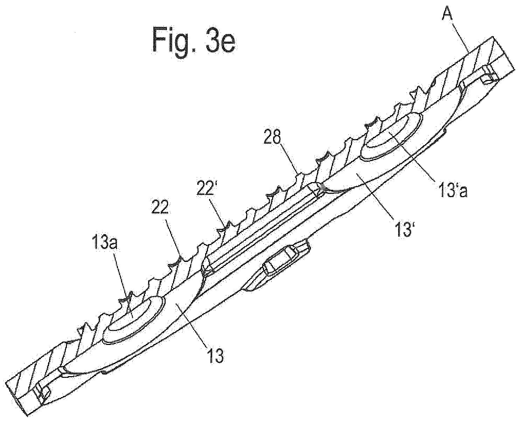

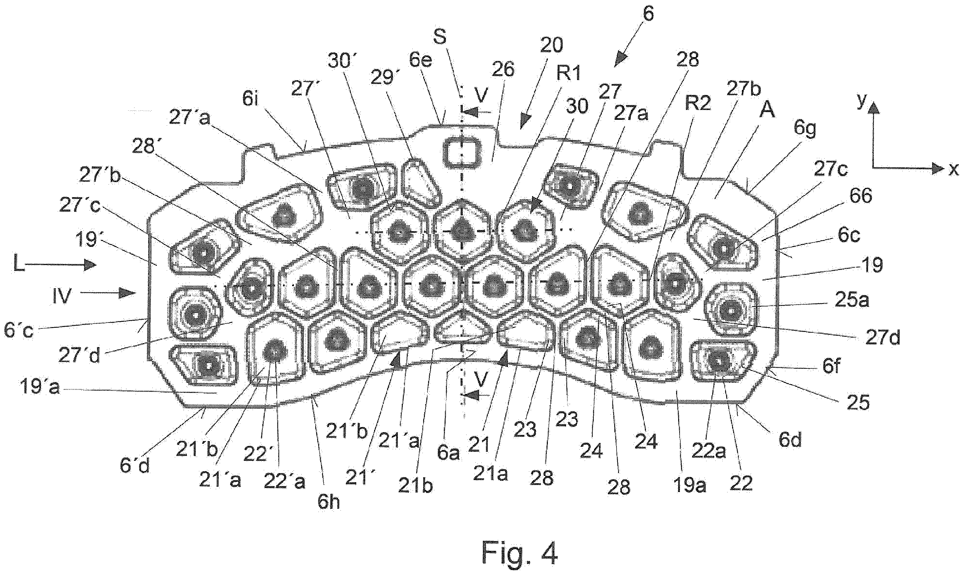

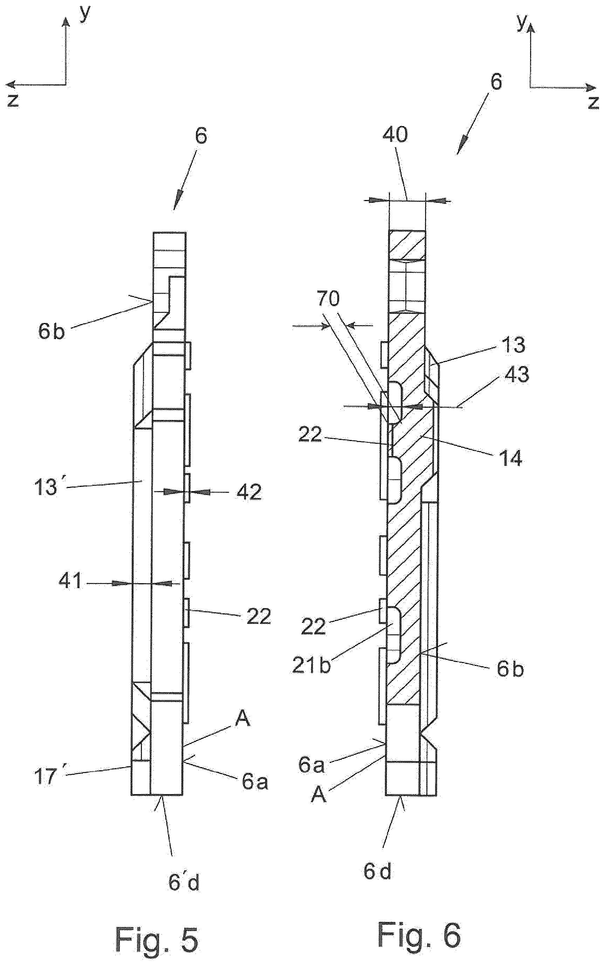

In **Fig. 2** ist eine schematische Ansicht einer Zuspannseite 6b eines Ausführungsbeispiels der Belagrückenplatte 6 des zuspannseitigen Bremsbelags 12a dargestellt. **Fig. 3** zeigt die Zuspannseite der Fig. 2 in der Perspektivansicht, so dass die Erhebungen und Vertiefungen noch deutlicher hervortreten. **Fig. 4** zeigt eine schematische Ansicht der Belagseite 6a der Belagrückenplatte 6 nach Fig. 2. In **Fig. 5** ist eine schematische Seitenansicht einer Anlagefläche der Belagrückenplatte 6 aus Richtung IV nach Fig. 3 gezeigt. **Fig. 6** zeigt eine schematische Schnittansicht längs Linie V-V der Belagrückenplatte 6 aus Fig. 2.

Die Belagrückenplatte 6 ist als ein einstückiges, insbesondere monolithisches, Bauteil, vorzugsweise ein Gussbauteil aus Stahl, und gewichtsreduziert ausgebildet. Die Oberseite weist teilweise abgerundete Seitenflächen 6i, Fasen 6g (Fig. 4) und nicht näher bezeichnete Vorsprünge für eine Belaghaltefeder auf.

Die Belagrückenplatte 6 erstreckt sich in einer Längsrichtung L, die auf einer Ebene A welche durch eine Oberfläche 26 der Belagseite 6a der Belagrückenplatte 6 aufgespannt wird und die sich im eingebauten Zustand in der Scheibenbremse 1 (Fig. 1) in tangentialer Richtung zu der Bremsscheibe 2 erstreckt. In Fig. 4 verläuft die Ebene A in der Zeichenebene und wird durch die Vektoren x und y aufgespannt. Eine Ausdehnung der Belagrückenplatte 6 in Längsrichtung L ist vorzugsweise 1,75 mal bis 2,4 mal, so groß wie die Erstreckung der Achse S, welche senkrecht zur Längsrichtung L und auf der Ebene A der Oberfläche 26 angeordnet ist. Eine Dicke 40 der Belagrückenplatte 6 ist in der Schnittansicht längs der Achse S nach Fig. 6 gezeigt und verläuft im eingebauten Zustand des Bremsbelags 12a in Richtung der Bremsscheibendrehachse 2a. Die Dicke 40 der Belagrückenplatte wird dabei durch die Oberflächen 18 und 26 begrenzt.

An den beiden Seiten der Belagrückenplatte 6, welche sich parallel zu der Achse S erstrecken, sind die Anlageflächen 6c und 6'c gebildet und können in einer Ausführung mechanisch bearbeitet sein. Die Anlageflächen 6c, 6'c stehen jeweils mit einer Innenseite eines Bremsträgerhorns 3a, 3'a in Kontakt.

Die Unterseite der Belagrückenplatte 6 weist eine bogenförmige Ausnehmung 6h (Fig. 4) auf, die sich von der Unterseite zu der Mitte der Belagrückenplatte 6 hin konvex erstreckt und symmetrisch zu der Achse S ist. An jedem Ende der bogenförmigen Ausnehmung 6h schließt sich zu jeder Seite ein gerader Abschnitt der Unterseite an. Diese Abschnitte sind auch symmetrisch zu der Achse S. Jeder dieser Abschnitte weist zur Unterseite hin jeweils die oben schon erwähnte Auflagefläche 6d, 6'd auf. Die Auflageflächen 6d, 6'd verlaufen in einer gemeinsamen Ebene der Unterseite rechtwinklig zu den Anlageflächen 6c, 6'c und in Längsrichtung der Belagrückenplatte 6. Zwischen den Anlageflächen 6c, 6'c und der jeweiligen Auflagefläche 6d, 6'd ist jeweils eine Fase angeordnet.

Im Bereich der Achse S ist die Oberseite der Belagrückenplatte 6 mit einer weiteren Auflagefläche 6e zur Auflage des oben erwähnten Belaghaltebügels versehen. Die Auflagefläche 6e kann nachbearbeitet sein.

Weiterhin kann die Belagrückenplatte 6 eine nicht gezeigte Aussparung zum Einsatz eines Belagverschleißsensors aufweisen. Auch diese Aussparung kann nachbearbeitet sein.

Die Reibmasse 5 ist auf der Belagseite 6a angebracht. Die Zuspannseite 6b steht mit der Zuspanneinrichtung 11 in Kontakt. Zunächst wird die Zuspannseite 6b im Zusammenhang mit Fig. 2 weiter behandelt.

Die Bereiche der Zuspannseite 6b der Belagrückenplatte 6, mit welchen die Zuspanneinrichtung 11 über die Druckstücke 7, 7' in Kontakt steht, sind als Druckabschnitte 13, 13', bevorzugt in gleicher Ausbildung, symmetrisch zu der Achse S auf der Zuspannseite 6b angeordnet. Die Druckabschnitte 13, 13' sind in diesem Ausführungsbeispiel kreisringförmig ausgebildet. Jeder Druckabschnitt 13, 13' steht von der Zuspannseite 6b um ein bestimmtes Maß von einer Oberfläche 18 der Zuspannseite 6b hervor und bildet so eine jeweilige Erhebung mit einer Höhe 41 (siehe Fig. 5). Die Oberfläche 18 bildet eine Haupterstreckungsebene der Belagrückenplatte 6. Die Höhe 41 kann in einer Ausführung z.B. mindestens 1 mm, bevorzugt 2 mm, besonders bevorzugt 3 mm betragen.

Die Mittelpunkte bzw. senkrecht auf der Zeichnung der Fig. 2 stehenden Mittellinien der kreisringförmigen Druckabschnitte 13, 13' verlaufen im eingebauten Zustand des Bremsbelags 12a in der Scheibenbremse 1 (Fig. 1) in den Mittellinien der zugehörigen Bremsstempel 8, 8'.

Jeder kreisringförmige Druckabschnitt 13, 13' ist mit einer Ausnehmung 13a, 13'a, z.B. mit kreisförmigem Querschnitt, versehen, wodurch eine bestimmte Ringbreite 13b, 13'b eines jeden kreisringförmigen Druckabschnitts 13, 13' festgelegt ist. Die Ringbreite 13b, 13'b kann in einer Ausführung z.B. 1 bis2 cm betragen. Die Ausnehmungen 13a, 13'a dienen zur Gewichtsreduktion der Belagrückenplatte 6.

In diesem Ausführungsbeispiel sind die Druckabschnitte 13, 13' in ihrem oberen Drittel mit einem Stegabschnitt 14 verbunden. Der Stegabschnitt 14 verläuft hier zwischen den Druckabschnitten 13, 13' gerade in Längsrichtung der Belagrückenplatte 6 und weist eine Stegbreite 14a auf, welche etwa die Hälfte des Außenradius eines Druckabschnitts 13, 13' beträgt. Eine gedachte Mittellinie M des Stegabschnitts 14 verläuft zu einer gedachten Verbindungslinie V der Mittelpunkte T1 und T2 der Druckabschnitte 13, 13' in einem Abstand, der hier etwa einem halben Radius eines Druckabschnitts 13, 13' entspricht.

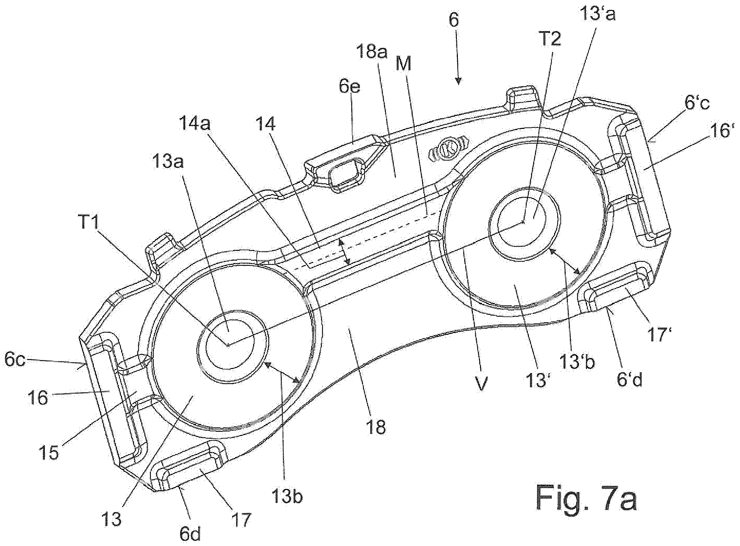

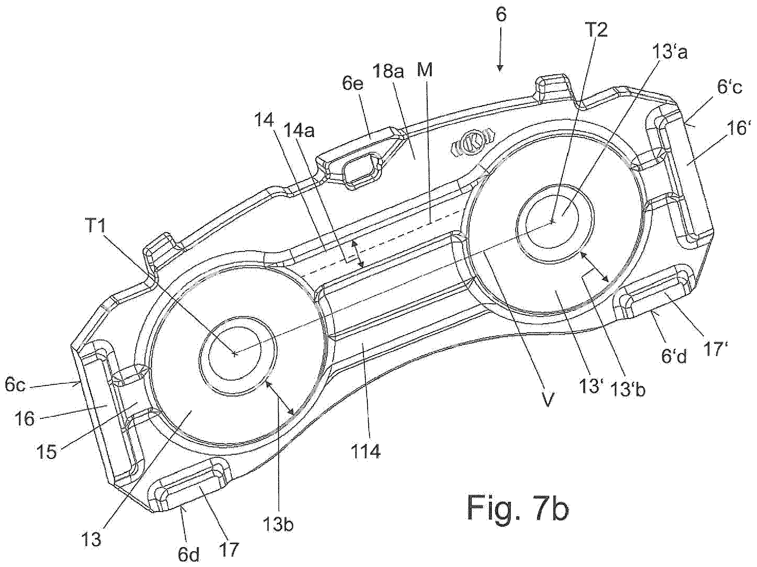

Der Stegabschnitt 14 bildet eine Art Versteifungsrippe. Versuche haben gezeigt, dass sich in dieser Ausführung der Belagrückenplatte 6 ein Bremsmoment der Scheibenbremse 1 von ca. 24 kNm erzielen lässt. Wenn eine zweiter Stegabschnitt im unteren Bereich zwischen den Druckabschnitten 13, 13' zusätzlich angeordnet ist, kann das Bremsmoment beispielsweise auf 27 oder 30 kNm erhöht werden. Dies ist in Fig. 7b dargestellt, welche ansonsten identisch zur Fig. 7a ist. Der zweite Stegabschnitt (114) kann dabei bevorzugt ebenfalls die vorgenannte bevorzugte Stegbreite und die bevorzugte Position gegenüber der gedachten Mittellinie M aufweisen.

Die Stegbreite 14a des Stegabschnitts 14 kann hierbei z.B. zumindest 1 cm betragen.

Der Stegabschnitt 14 steht von einem Oberflächenabschnitt 18a, der in der gleichen Ebene wie der Oberflächenabschnitt 18 liegt, um ein bestimmtes Maß hervor. Dieses Maß kann gleich der Höhe 41 der Druckabschnitte 13, 13', kleiner oder größer als diese sein. In einer Ausführung kann die Höhe 41 des Stegabschnitts 14 zumindest 1 mm betragen.

In weiterer Ausbildung ist jeder Druckabschnitt 13, 13' an seiner jeweiligen Seite, die zu der zugehörigen Seite der Belagrückenplatte 6 mit der Anlagefläche 6c, 6'c weist, über einen kurzen Versteifungsabschnitt 15, 15' jeweils mit einem Anlageleistenabschnitt 16, 16' verbunden.

Der kurze Versteifungsabschnitt 15, 15' erstreckt sich in der gedachten Verbindungslinie der Mittelpunkte der Druckabschnitte 13, 13' radial von dem kreisringförmigen Druckabschnitt 13, 13' bis zu dem zugehörigen, rechtwinklig dazu verlaufenden Anlageleistenabschnitt 16, 16'. Der Versteifungsabschnitt 15, 15' weist hier eine Breite auf, die ungefähr der Stegbreite 14a des Stegabschnitts 14 entspricht.

Jeder Anlageleistenabschnitt 16, 16' bildet eine Verdickung und somit Versteifung einer jeden Seite mit der jeweiligen Anlagefläche 6c, 6'c in Richtung der Dicke 40 der Belagrückenplatte 6. Ein jeder Anlageleistenabschnitt 16, 16' erstreckt sich hier über die gesamte Länge der zugehörigen Seite parallel zu der Achse S in deren Richtung. Eine Erstreckung eines jeden Anlageleistenabschnitts 16, 16' in Längsrichtung der Belagrückenplatte 6 kann hier ungefähr eine halbe Stegabschnittbreite 14a betragen. Dabei kann das Maß dieser Erstreckung z.B. zumindest 8 mm, bevorzugt 8,4...8,5 mm, besonders bevorzugt 9 mm betragen. Eine Toleranz dieses Maßes kann z.B. im Bereich von ±0,4 mm liegen.

Die kurzen Versteifungsabschnitte 15, 15' und die damit verbundenen Anlageleistenabschnitte 16, 16' sind symmetrisch zu der Achse S und stehen von der Oberfläche 18 um ein bestimmtes Maß hervor. Dieses Maß kann z.B. der Höhe 41 der Druckabschnitte 13, 13' entsprechen.

Im Bereich der Auflageflächen 6d, 6'd ist auf dem zugehörigen Abschnitt der Oberfläche 18 jeweils ein Auflageleistenabschnitt 17, 17' vorgesehen, der sich in Längsrichtung der Belagrückenplatte 6 von dem jeweiligen außenliegenden Ende an der Fase zur Mitte hin über etwa drei Viertel der Länge der Auflagefläche 6d, 6'd erstreckt.

Eine Erstreckung eines jeden Auflageleistenabschnitts 17, 17' in Richtung der Achse S kann hier ungefähr eine halbe Stegabschnittbreite 14a betragen. Dabei kann das Maß dieser Erstreckung z.B. zumindest 8 mm, bevorzugt 8,4...8,5 mm, besonders bevorzugt 9 mm betragen. Eine Toleranz dieses Maßes kann z.B. im Bereich von ±0,4 mm liegen.

Die Auflageleistenabschnitte 17, 17' sind symmetrisch zur Achse S angeordnet und stehen ähnlich oder in gleicher Weise wie die Anlageleistenabschnitte 16, 16' von der Oberfläche 18 um ein gleiches oder anderes Maß hervor.

Die Anlageleistenabschnitte 16, 16' bilden mit ihren Außenseiten jeweils eine Vergrößerung der seitlichen Anlageflächen 6c, 6'c. Die Auflageleistenabschnitte 17, 17' bilden mit ihren Unterseiten jeweils eine Vergrößerung der Auflageflächen 6d, 6'd. Die Versteifungsabschnitte 15, 15', die Anlageleistenabschnitte 16, 16' und die Auflageleistenabschnitte 17, 17' bilden außerdem eine Versteifung der Belagrückenplatte 6.

Die Dimensionierung und Formung des Stegabschnitts 14, der Verbindungsbereiche zwischen ihm und den Druckabschnitten 13, 13', der Versteifungsabschnitte 15, 15', der Anlageleistenabschnitte 16, 16' und der Auflageleistenabschnitte 17, 17' sind entsprechend der auftretenden Kräfte belastungs- und/oder geräuschoptimiert geformt. Dazu dienen Messergebnisse, aus welchen Kraftverläufe und/oder Anregungsfrequenzen ermittelt werden können.

Die Druckabschnitte 13, 13', der Stegabschnitt 14, die Versteifungsabschnitte 15, 15', die Anlageleistenabschnitte 16, 16' und die Auflageleistenabschnitte 17, 17' sind jeweils mit einer Fase bzw. einem abgerundeten Übergang zu der Oberfläche 18, 18a der Belagrückenplatte 6 versehen. Diese abgerundeten Übergänge können einen Radius z.B. in einem Bereich von 3...8 mm aufweisen. Die Anlageleistenabschnitte 16, 16' und die Auflageleistenabschnitte 17, 17' sind an ihren Außenseiten jeweils zur Vergrößerung der jeweils zugehörigen Anlageflächen 6c, 6'c bzw. Auflageflächen 6d, 6'd entsprechend bearbeitet.

Mittels dieses Aufbaus der Zuspannseite 6b der Belagrückenplatte 6 des zuspannseitigen Bremsbelags 12a kann einen Gewichtsreduktion des Gesamtgewichts des zuspannseitigen Bremsbelags 12a erzielt werden. Das Material der Belagrückenplatte 6b, welches sich sonst zwischen den oben beschriebenen Erhebungsabschnitten 13, 13'; 14; 15, 15'; 16, 16'; 17, 17' befinden würde, ist bis auf die Oberfläche 18, 18a abgetragen. Die Struktur der Erhebungsabschnitte 13, 13'; 14; 15, 15'; 16, 16'; 17, 17', deren Anordnung, insbesondere in Bereichen von Kraftverläufen mit hohen Kraftanteilen, und Verbindung untereinander ermöglicht trotz der Materialeinsparung eine ausreichende Steifigkeit und Festigkeit für den Einsatz des zuspannseitigen Bremsbelags 12a in unterschiedlichen Bremsausführungen.

Eine weitere Möglichkeit zur Gewichtsreduktion bei gleichzeitiger Bewahrung der Festigkeit und Stabilität des zuspannseitigen Bremsbelags 12a besteht darin, die Belagseite 6a der Belagrückenplatte 6 zu gestalten. Dies wird nun im Zusammenhang mit Fig. 4 näher beschrieben.

Die Belagseite 6a weist eine Oberfläche 26 auf, in welche eine Strukturanordnung 20 eingeformt ist.
Die Oberfläche 26 bildet um die Strukturordnung umlaufenden, vorzugsweise ebenen, Randbereich 66 aus. Die Belagrückenplatte 6 weist im größten Teil des umlaufenden Randbereichs 66, insbesondere außerhalb der Anagenabschnitte 16, 16', 17, 17' eine einheitliche Plattendicke mit der Dicke 40 auf. Es gibt jedoch auch kleinere Randabschnitte welche eine Materialdicke von bis zu 8,5 cm aufweisen.

Die Strukturanordnung 20 weist eine Anzahl unterschiedlicher Strukturelemente 21, 21', 29', 30, 30' auf. Zwischen den Strukturelementen 21, 21', 29', 30, 30' sind unterschiedlich breite und verzweigte Abschnitte angeordnet, welche Versteifungsabschnitte 27, 27', Stegversteifungsabschnitte 27a-27d, 27'a-27'd und Stege 28, 28' bilden.

Das Strukturelement 21 weist einen Rand 21a und eine Ausnehmung 21b mit einer Tiefe 43 (Fig. 6) auf. Die Ausnehmung 21b weist eine Bodenfläche 21c auf, welche vorzugsweise parallel zur der Oberfläche 26 verläuft. Der Rand 21a umgibt die Ausnehmung 21b umlaufend und ist mit einer Fase und/oder Abrundung 65 versehen. Dieser Aufbau gilt stellvertretend für alle Strukturelemente 21, 21', 29', 30, 30'.

In diesem Ausführungsbeispiel weisen die meisten der Strukturelemente 21, 21', 29', 30, 30' domartige Erhebungen 22, 22' auf. Die Erhebungen 22, 22' können rund, oval, dreieckig oder mehreckig, mit gefülltem Kern und/oder aufgrund von Vertiefungen 22a, 22'a innen hohl sein. Die Vertiefungen 22a, 22'a sind zur Reibmasse 5 (Fig. 1) hin weisend offen. Die Erhebungen 22, 22' stehen in diesem Ausführungsbeispiel z.B. bis zur Höhe des jeweiligen Rands 21a von der Bodenfläche 21c der jeweiligen Ausnehmung 21b hervor. Die Erhebungen 22, 22' können in einer Variante auch über den jeweiligen Rand 21a hinaus von der Oberfläche 26 um ein bestimmtes Maß hervorstehen. Dieses Maß kann z.B. in einem Bereich von vorzugsweise 1 bis2 mm liegen.

In einer Draufsicht senkrecht zur Ebene der Oberfläche 26 können die Erhebungen 22, 22' in Fig. 4 zwischen 15 bis 50 %, insbesondere 20-30%, der Fläche der Ausnehmung 21b einnehmen. Die Fläche der Ausnehmung ist dabei die Fläche welche die Ausnehmung auf der Ebene der Oberfläche 26 einnimmt. Flächen, z.B. die Randfläche, welche senkrecht zur Oberfläche 26 verlaufen, werden dabei nicht berücksichtigt und bei Flächen welche schräg oder kurvenartig zur Ebene der Oberfläche 26 verlaufen, z.B. bei den Abrundungen 65, wird nur der vektorielle Anteil berücksichtigt, welcher parallel zur Ebene der Oberfläche 26 verläuft.

Die Ausnehmung 21b weist die Tiefe 43 auf, mit welcher sie gegenüber der Ebene der Oberfläche 26 abgesenkt ist. Diese maximale Tiefe kann bevorzugt das zwischen 20 bis 60% der Plattendicke 40 betragen.

Wie man erkennt weisen die Erhebungen 22, 22' auch eine unterschiedliche Breite 71 und 72 auf.

Ein Mindest-Abstand 95 wird durch die engste Stelle bzw. den kürzesten Abstand zwischen der Erhebung 22 und dem Rand 21a der Ausnehmung 21b definiert. Er kann vorzugsweise zumindest 50%, besonders bevorzugt 80-400%, der Tiefe der Ausnehmung betragen.

Die Erhebungen 22, 22' weisen eine Höhe 70 auf mit welcher sie aus der Bodenfläche 21c hervorstehen. Die Höhe 70 kann bevorzugt zwischen 120% bis 165% der maximalen Tiefe 43 betragen.

Die Stege 28, 28' weisen entlang eines Abschnitts von zumindest 50% ihrer jeweiligen Haupterstreckungsrichtung vorzugsweise eine Breite 80 auf. Diese Breite 80 beträgt vorzugsweise zwischen 80-130% der Tiefe 43 der Ausnehmung 21b auf.

Bevorzugt liegen die Stirnseiten die Stege 28, 28' gemeinsam mit der Oberfläche 26 auf einer Ebene A.

Die Länge 90 von zumindest 50% aller Stege 28, 28', insbesondere von zumindest 50% aller Stege 28, 28' mit einheitlicher Breite, entlang ihrer jeweiligen Haupterstreckungsrichtung kann vorzugsweise zwischen dem 2,5-7 fachen der Tiefe 43 der Ausnehmung 21b betragen.

Vorzugsweise weisen zumindest 50% aller Stege eine einheitliche Länge 90 auf. Dabei bedeutet "einheitlich" dass die Länge der entsprechenden Stege um weniger als 10% voneinander abweicht. Gleiches gilt für die Breite.

Bevorzugt kann die Breite 80 von zumindest 50% aller Stege der Strukturanordnung, insbesondere von zumindest 50% aller Stege mit einheitlicher Länge 90, zumindest 1,8 mm, vorzugsweise 2-4 mm betragen.

Bevorzugt kann die Länge 90 von zumindest 50% aller Stege der Strukturanordnung, insbesondere von zumindest 50% aller Stege der Strukturanordnung mit einheitlicher Breite 80, zumindest 3 mm, vorzugsweise 4-6 mm betragen.
Alle Strukturelemente 21, 21', 30, 30' sind mehreckig ausgebildet, wobei alle Ecken gerundet sind.

Die Form der Strukturelemente und deren Ausgestaltungen entlang der Oberfläche 26 sind ebenso wie die Form der Erhebungen innerhalb der Ausnehmung 21b sind nochmals in Fig. 7 in der Perspektive deutlicher erkennbar.

Die Strukturanordnung 20 der Strukturelemente 21, 21', 29', 30, 30' weist zwei mittlere Reihen R1, R2 auf, welche in Längsrichtung der Belagrückenplatte 6 verlaufen. Dabei weist die obere mittlere Reihe R1 drei sechseckförmige Wabenstrukturelemente 30, 30' nebeneinander auf. In der darunter liegenden Reihe R2 sind zwei weitere Wabenstrukturelemente 30 angeordnet, so dass sich eine Art Wabenstruktur ergibt, die symmetrisch zu der Achse S ist. Die Achse S verläuft hier durch das mittlere Wabenstrukturelement 30 der oberen Reihe R1 und darunter durch einen Stegabschnitt, der die beiden Wabenstrukturelementen 30 der unteren Reihe R2 trennt.

Rechts von dem einen der beiden Wabenstrukturelemente 30 der unteren Reihe R2 ist ein fünfeckiges Strukturelement angeordnet, dessen linke Hälfte ein halbes Wabenstrukturelement bildet, wobei der obere Eckpunkt der rechten Hälfte weiter oben liegt. Weiter rechts neben diesem fünfeckigen Strukturelement ist ein zu diesem spiegelbildliches fünfeckiges Strukturelement angeordnet, an dessen rechter Seite ein unregelmäßiges viereckiges Strukturelement liegt. Diese Anordnung befindet sich symmetrisch zur Achse S auf der linken Seite des linken Wabenstrukturelementes 30 in der unteren Reihe R2.

Alle Strukturelemente der oberen und unteren Reihe R1, R2 weisen Erhebungen 22, 22' mit Vertiefungen 22a, 22'a auf, wobei gedachte Linien der beiden Reihen R1, R2 jeweils durch die Mittelpunkte der Erhebungen 22, 22' verlaufen. Die Erhebungen 22, 22' der außenliegenden unregelmäßigen viereckigen Strukturelemente sind kreisrund, wobei die anderen Erhebungen 22, 22' dreieckförmige Ausbildung aufweisen. Die Erhebungen 22, 22' dienen nicht nur zur Versteifung, sondern auch zur Verbesserung einer Befestigung der Reibmasse 5 auf der Belagseite 6a.

Diese Anordnung der mittleren Reihen R1, R2 ist umlaufend mit den Strukturelementen 21, 21' in einer zur Achse S symmetrischen Anordnung umgeben. Lediglich ein Strukturelement 29' im oberen linken Bereich ist als ein einzelnes Element vorhanden. Bis auf drei "halbe" Wabenstrukturelemente in der Mitte unterhalb der unteren Reihe R2 und bis auf das Strukturelement 29' sind alle anderen Strukturelemente 21, 21' der umgebenden Anordnung jeweils mit einer Erhebung 22, 22' versehen.

In den seitlichen Randbereichen sind jeweils drei Strukturelemente 21, 21' der umlaufenden Anordnung übereinander angeordnet, wobei jeweils das oberste Strukturelement 21, 21' mit zwei weiteren Strukturelementen 21, 21' auf einem Bogen, der jeweils vom Rand zur Achse S hin verläuft, angeordnet ist.

Neben dem jeweiligen unteren Randbereichs-Strukturelement 21, 21' befinden sich auf jeweils drei Strukturelemente 21, 21' auf einem zu der bogenförmigen Seitenfläche 6h konzentrischen Bogen links und rechts von einem mittleren dreieckförmigen Strukturelement 21.

Die Strukturelemente 21, 21' der umgebenden Anordnung weisen jeweils einen Randabschnitt ihres jeweiligen Rands 21a, 21'a auf, welcher im Wesentlichen wie der jeweils daneben liegende Abschnitt des Rands der Belagrückenplatte 6 verläuft. So verlaufen z.B. die äußeren Randabschnitte 25 der in unteren übereinander angeordneten Strukturelemente 21, 21' in den Randbereichen jeweils parallel zu den Fasen mit den Seitenflächen 6f. Die mittleren Strukturelemente 21, 21' der übereinander angeordneten Strukturelemente 21, 21' in den Randbereichen weisen Randabschnitte 25a auf, die parallel zu den Rändern mit den seitlichen Anlageflächen 6c, 6'c verlaufen.

Zwischen dem linken und dem rechten End-Wabenstrukturelement 30, 30' der oberen Reihe R1 und den Strukturelementen 21, 21' der umgebenden Anordnung sind relativ großflächige Versteifungsabschnitte 27, 27' gebildet, die mit weiteren Stegversteifungsabschnitten 27a, 27'a und 27b, 27'b verbunden und in Bereichen der Druckabschnitte 13, 13' der Zuspannseite 6b der Belagrückenplatte 6, insbesondere im Bereich der Außendurchmesser der Druckabschnitte 13, 13', liegen, auf welche die Bremsstempel 8, 8' der Zuspanneinrichtung 11 bei Bremsvorgängen einwirken und entsprechend hohe Kräfte auftreten können. Auf diese Weise wird eine Versteifung gebildet, die in der Lage ist, die auftretenden Kräfte wirksam in der Belagrückenplatte 6 so zu verteilen, dass eine Verminderung von Überlastung und Bruchgefahr sowie eine Erhöhung einer Lebensdauer erzielt werden kann.

Zu diesem Zweck sind auch weitere relativ breite Stegversteifungsabschnitte 27c, 27'c und 27d, 27'd zwischen den End-Strukturelementen 21, 21' der unteren Reihe R2 und den seitlichen übereinander angeordneten Rand-Strukturelementen 21, 21' der umgebenden Anordnung vorgesehen.
Ein Steg oder mehrere Stege 28, 28' zur Versteifung sind auch zwischen Randabschnitten 24 der Strukturelemente 21, 21', 30, 30' der beiden Reihen R1, R2 untereinander, sowie zwischen diesen und den Strukturelementen 21, 21' des unteren bogenförmigen Abschnitts der umgebenden Anordnung und wiederum deren Randabschnitten 23 untereinander vorgesehen.

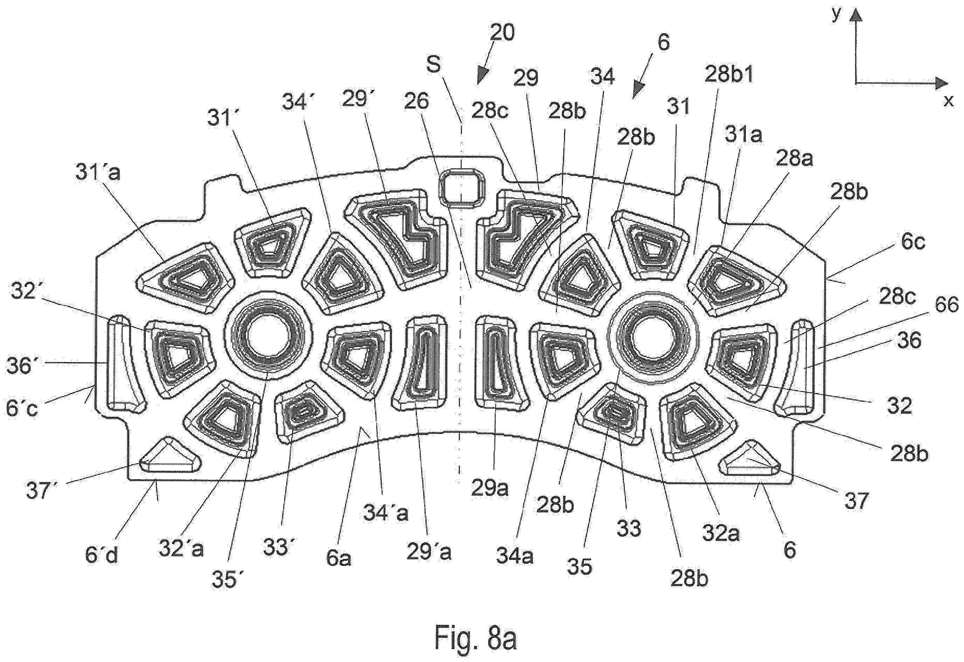

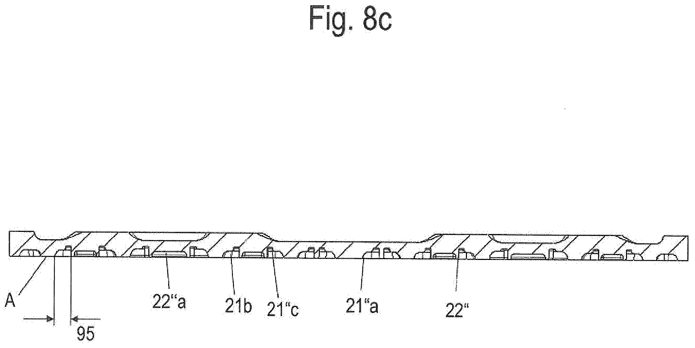

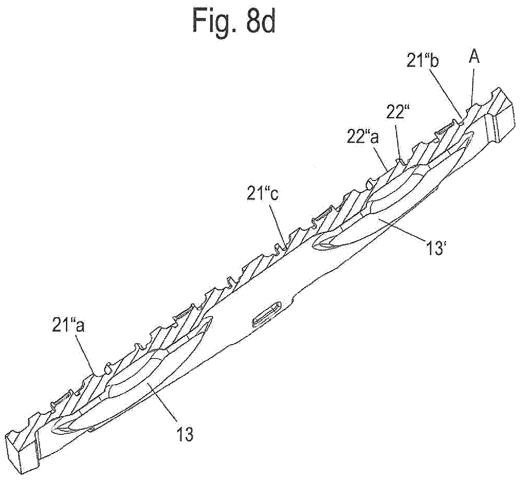

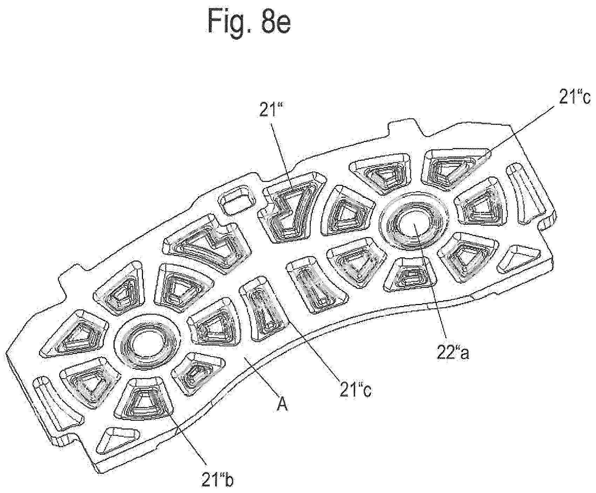

**Fig. 8a** - **8e** stellen eine schematische Ansicht der Belagseite 6a einer zweiten Variante der Belagrückenplatte 6 dar.

In der Variante nach Fig. 4 und 7 ist die Strukturanordnung 20 auf der Belagseite 6a der Belagrückenplatte 6 symmetrisch zu der Achse S angeordnet. Die Strukturanordnung 20 weist hier Strukturelemente 29, 29', 29a, 29'a, 31, 31', 31a, 31'a, 32, 32', 32a, 32'a, 33, 33', 34, 34', 35, 35', 36, 36', 37 und 37' unterschiedlicher Form und Größe auf. Diese Strukturelemente können wie oben beschrieben mit Vertiefungen mit umlaufenden Rändern und mit oder ohne innere Erhebungen ausgebildet sein. Die Erhebungen können hier z.B. Trapezformen, oder auch andere Formen aufweisen.

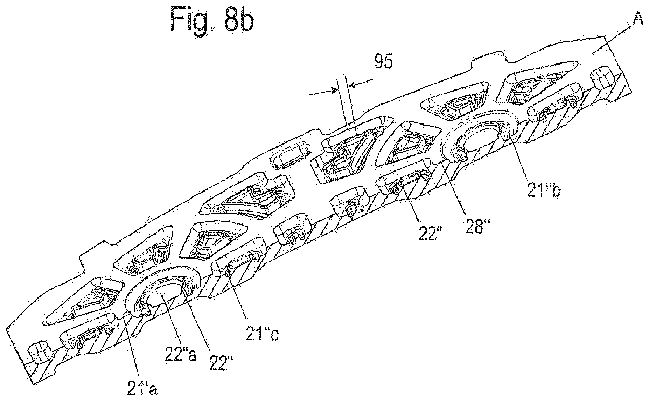

Zur besseren Übersichtlichkeit wurden in Fig. 8b - 8e einige Vereinfachungen im Rahmen der Bezeichnungen vorgenommen:
Zur Vereinfachung werden die Ränder der Ausnehmungen der Strukturelemente 29, 29', 29a, 29'a, 31, 31', 31a, 31'a, 32, 32', 32a, 32'a, 33, 33', 34, 34', 35, 35', 36, 36', 37 und 37' einheitlich mit 21"a bezeichnet.

Zur Vereinfachung werden die Ausnehmungen der Strukturelemente 29, 29', 29a, 29'a, 31, 31', 31a, 31'a, 32, 32', 32a, 32'a, 33, 33', 34, 34', 35, 35', 36, 36', 37 und 37' einheitlich mit 21"b bezeichnet.

Zur Vereinfachung werden die Erhebungen in den Ausnehmungen 21"b der Strukturelemente 29, 29', 29a, 29'a, 31, 31', 31a, 31'a, 32, 32', 32a, 32'a, 33, 33', 34, 34', 35, 35', 36, 36', 37 und 37' einheitlich mit 22" bezeichnet.

Die Bodenfläche der Ausnehmungen 21"b werden mit 21"c bezeichnet.

Zur Vereinfachung werden die Vertiefungen in den Erhebungen 22" einheitlich mit 22"a bezeichnet.

Jede Erhebung 22" weist einem Mindest-Abstand vom einem die Ausnehmung begrenzenden Rand 21"a auf.

Dieser Mindest-Abstand kann vorzugsweise zumindest 50%, besonders bevorzugt 80-400%, der Tiefe der Ausnehmung betragen
Es versteht sich dass die Geometrie und Dimension der Vertiefungen 21", der Bodenflächen 21"c und der Erhebungen 22" und/oder der darin befindlichen Vertiefungen 22"a sich in Geometrie und Dimensionierung voneinander unterscheiden können

In dieser Variante sind auf der rechten Hälfte der Belagseite 6a sieben Strukturelemente 31, 31a, 32, 32a, 33, 34 und 34a kreisförmig um ein kreisrundes Strukturelement 35 angeordnet. Ein Mittelpunkt des inneren Strukturelementes 35 liegt in der Achse durch den Mittelpunkt des auf der Zuspannseite 6b befindlichen Druckabschnitts 13 und somit in der Achse des zugehörigen Bremsstempels 8. Die auf der Kreislinie befindliche Anordnung liegt in dem Bereich des Kreisrings des Druckabschnitts 13.

Das auf diese Weise zentral angeordnete kreisrunde Strukturelement 35 ist von einem nabenartigen Ringstegabschnitt 28a umgeben. Der Ringstegabschnitt 28a ist speichenartig mit sieben Speichenstegabschnitten 28b verbunden, welche sich radial von dem Ringstegabschnitt 28a ausgehend erstrecken und in im Wesentlichen gleichen Winkelabständen voneinander angeordnet sind. Die Speichenstegabschnitte 28b verlaufen dabei jeweils zwischen den kreisförmig angeordneten Strukturelementen 31, 31a, 32, 32a, 33, 34 und 34a und sind an ihren äußeren gedachten Ende mit einem weiteren Ringstegabschnitt 28c verbunden. Eine Breite der Speichenstegabschnitte 28b vergrößert sich mit dem Abstand von dem inneren Ringstegabschnitt 28a nach außen hin.

Der weitere Ringstegabschnitt 28c umgibt die kreisförmig angeordneten Strukturelemente 31, 31a, 32, 32a, 33, 34 und 34a. Auf diese Weise ist eine Art Speichenradanordnung gebildet, wobei die Strukturelemente 31, 31a, 32, 32a, 33, 34 und 34a in den Zwischenräumen der Speichenstegabschnitte 28b und Ringstegabschnitte 28a, 28c liegen.

Die Form eines jeden der kreisförmig angeordneten Strukturelemente 31, 31a, 32, 32a, 33, 34 und 34a ist im Wesentlichen trapezähnlich, wobei die Randabschnitte an den Ringstegabschnitten 28a und 28c jeweils bogenförmig dem Durchmesser des jeweiligen Ringstegabschnitts 28a, 28c entsprechen.

Die kreisförmige Anordnung der Strukturelemente 31, 31a, 32, 32a, 33, 34 und 34a wird in Bezug auf einen oben liegenden Referenz-Speichenstegabschnitt 28b1 beschrieben, dessen gedachte Längsachse in Verlängerung schräg nach unten durch den Mittelpunkt des zentralen kreisförmigen Strukturelementes 35 verläuft und so mit der Achse S einen Winkel von etwa 30° einschließt.

Links und rechts von diesem Referenz-Speichenstegabschnitt 28b1 sind die Strukturelemente 31, 31a symmetrisch zu diesem angeordnet und trapezartig ausgebildet. Diametral gegenüber verläuft die gedachte Längsachse des Referenz-Speichenstegabschnitts 28b1 in Verlängerung durch das ebenfalls trapezförmig ausgebildete Strukturelement 33, dessen unterer Randabschnitt zu der bogenförmigen Ausnehmung 6h weist.

Die ebenfalls zu einem Speichenstegabschnitt 28b symmetrischen zwei Strukturelemente 32, 32a sind außerdem zu der gedachten Längsachse des Referenz-Speichenstegabschnitts 28b1 symmetrisch zu den gegenüberliegenden zwei Strukturelemente 34, 34a.

Im seitlichen Bereich der Anlagefläche 6c ist das Strukturelement 36 vorgesehen, Ein gerader Randabschnitt des Strukturelements 36 verläuft in Richtung der Achse S parallel zu der Anlagefläche 6c. Der gegenüberliegende Randabschnitt ist konzentrisch zu dem Außenradius des daneben auf der Kreisbahn liegenden Strukturelementes 32 und von diesem durch den dazwischen liegenden Ringstegabschnitt 28c getrennt.

Die Belagrückenplatte 6 weist in dieser Variante keine Fasen, sondern nicht näher bezeichnete Ausklinkungen an den unteren Ecken zwischen den Anlageflächen 6c, 6'c und den Auflageflächen 6d, 6'd auf.

Oberhalb der Auflagefläche 6d ist hier ein dreieckförmiges Strukturelement 37 angeordnet, dessen unterer Randabschnitt parallel zu der Auflagefläche 6d verläuft. Ein zu dem Strukturelement 32a weisender Randabschnitt ist wie der entsprechende Randabschnitt des Strukturelements 36 konzentrisch zu dem Außenradius des daneben auf der Kreisbahn liegenden Strukturelementes 32a und von diesem durch den dazwischen liegenden Ringstegabschnitt 28c getrennt.

Zwischen den Strukturelementen 34 und 34a und der Achse S ist jeweils ein relativ großflächiges Strukturelement 29, 29a angeordnet und durch den Ringstegabschnitt 28c von dem jeweiligen Strukturelement 34, 34a getrennt. Die zu den Strukturelementen 34, 34a weisenden Randabschnitte der Strukturelemente 29, 29a sind entsprechend dem Ringstegabschnitt 28c konzentrisch zu diesem geformt.

Zwischen den Strukturelementen 29, 29a verläuft ein sich bis zur Achse S weiter verbreiternder Speichenstegabschnitt 28b, der mit einem zentralen, in der Achse S verlaufenden Steg 28 verbunden ist. Die äußeren Randabschnitte der Strukturelemente 29, 29a verlaufen entsprechend der in ihrer Nähe befindlichen Randkonturen der Belagrückenplatte 6.

Eine linke obere, zur Achse S weisende Ecke des Strukturelementes 19 ist aufgrund einer Öffnung in der Belagrückenplatte 6 ausgespart.

Die Strukturelemente 29', 29'a, 31', 31'a, 32', 32'a, 33', 34', 34'a, 35', 36' und 37' auf der linken Hälfte der Belagseite 6a sind spiegelbildlich zur Achse S zu den Strukturelementen 29, 29a, 31, 31a, 32, 32a, 33, 34, 34a, 35, 36 und 37 der rechten Hälfte angeordnet und aufgebaut. Die vorstehende Beschreibung gilt somit auch für die linke Hälfte.

In den Figuren 7-11, ausgenommen Fig. 8a, sind schematische Ansichten der Zuspannseite 6b weiterer Varianten im Aufbau der Zuspannseite 6b der Belagrückenplatte 6 nach Fig. 2 dargestellt. Die oben stehenden Beschreibungen der Ausführung nach Fig. 2 gelten hier auch und werden nicht erneut erwähnt, nur falls notwendig. Es werden hier nur die Unterschiede beschrieben.

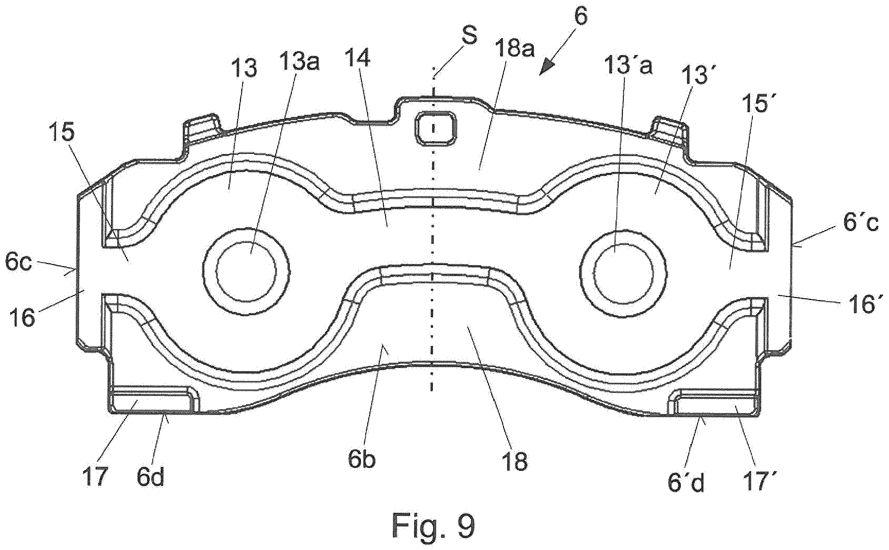

**Fig. 9** zeigt eine erste Variante, bei welcher der Stegabschnitt 14 zwischen den Druckabschnitten 13, 13' eine leicht geschwungene Form aufweist. Die Übergänge des Stegabschnitts 14 zu dem jeweiligen Druckabschnitt 13, 13' sind mit größeren Radien versehen als in dem ersten Ausführungsbeispiels nach Fig. 2. Dieses ist auch bei den Übergängen zwischen den Druckabschnitten 13, 13' und den Versteifungsabschnitten 15, 15' der Fall.

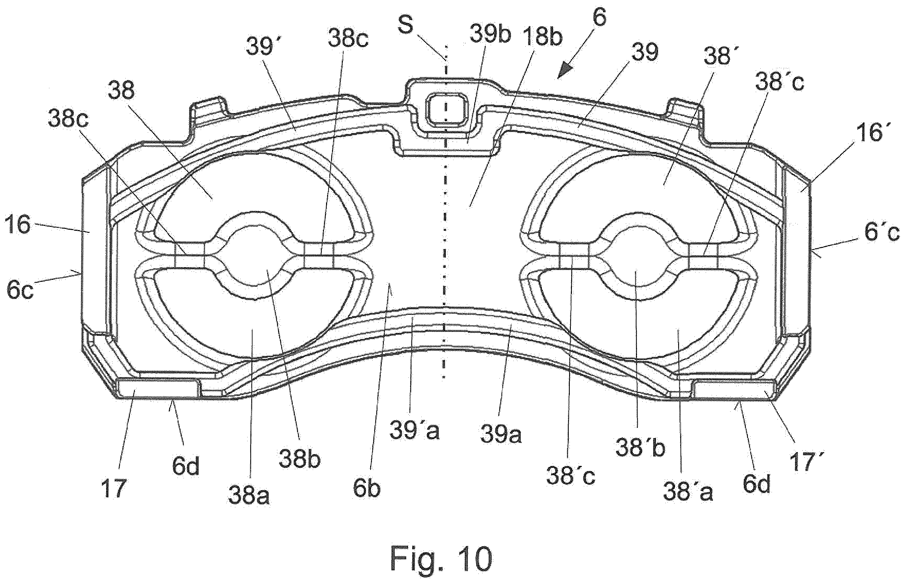

Eine zweite Variante im Aufbau der Zuspannseite 6b ist in **Fig. 10** dargestellt. Hierbei sind die kreisringförmigen Druckabschnitte 13, 13' des ersten Ausführungsbeispiels nach Fig. 2 jeweils in zwei halbkreisförmige Ringsegmentdruckabschnitte 38, 38a und 38', 38'a aufgeteilt. In deren Mitte ist jeweils eine kreisförmige Vertiefung 38b, 38'b eingeformt, welche beidseitig jeweils mit einer geradlinigen Vertiefung 38c, 38'c zwischen den zugehörigen Ringsegmentdruckabschnitten 38, 38a und 38', 38'a kommuniziert. Die geradlinigen Vertiefungen 38c, 38'c verlaufen in einer gedachten geraden Verbindungslinie in Längsrichtung der Belagrückenplatte 6 durch die Mittelpunkte der Ringsegmentdruckabschnitte 38, 38a und 38', 38'a.

Die oberen Ringsegmentdruckabschnitte 38, 38' sind durch einen geschwungenen Stegabschnitt 39, 39' jeweils an ihrer Außenseite verbunden. Der Stegabschnitt 39, 39' ist in der Mitte im Bereich der Achse S um einen unteren Bereich einer nicht näher bezeichneten Öffnung in der Belagrückenplatte 6 herum mit einem Stegabschnitt 39b gekröpft ausgeführt und verläuft nahe an dem oberen Randbogen der Belagrückenplatte 6, jedoch mit einem kleineren Bogenradius.

Das linke und rechte Ende des Stegabschnitts 39, 39' ist jeweils in einem oberen Viertel des jeweiligen Anlageleistenabschnitts 16, 16' verbunden.

Ein weiterer, unterer Stegabschnitt 39a, 39'a verbindet die unteren Ringsegmentdruckabschnitte 38a, 38'a an ihren unteren Außenseiten und verläuft konzentrisch zu der konvexen Ausnehmung 6h am unteren Rand der Belagrückenplatte 6 in einem Abstand, der etwa so groß ist wie die Breite des Stegabschnitts 39a, 39'a.

Die Verbindungsstellen des unteren Stegabschnitts 39a, 39'a mit den unteren Ringsegmentdruckabschnitten 38a, 38'a liegen jeweils diametral zu den Verbindungsstellen des oberen Stegabschnitts 39, 39' mit den oberen Ringsegmentdruckabschnitten 38, 38'. Eine jeweilige gedachte Linie durch diese Verbindungen bildet jeweils mit der Achse S einen Winkel von etwa 20°.

Das linke und rechte Ende des unteren Stegabschnitts 39a, 39'a ist jeweils im Bereich der Auflageflächen 6d, 6'd mit dem jeweiligen Auflageleistenabschnitt 17, 17' verbunden und verläuft jeweils im Bereich der Fasen weiter als eine Verbindung zwischen dem jeweiligen Auflageleistenabschnitt 17, 17' und dem jeweiligen unteren Ende des zugehörigen Anlageleistenabschnitts 16, 16'.

Eine Breite der Stegabschnitte 39, 39', 39a, 39'a entspricht hier etwa einem Drittel der Breie der Ringsegmentdruckabschnitte 38, 38', 38a, 38'a.

Versteifungsabschnitte 15, 15' sind in dieser Variante nicht vorhanden.

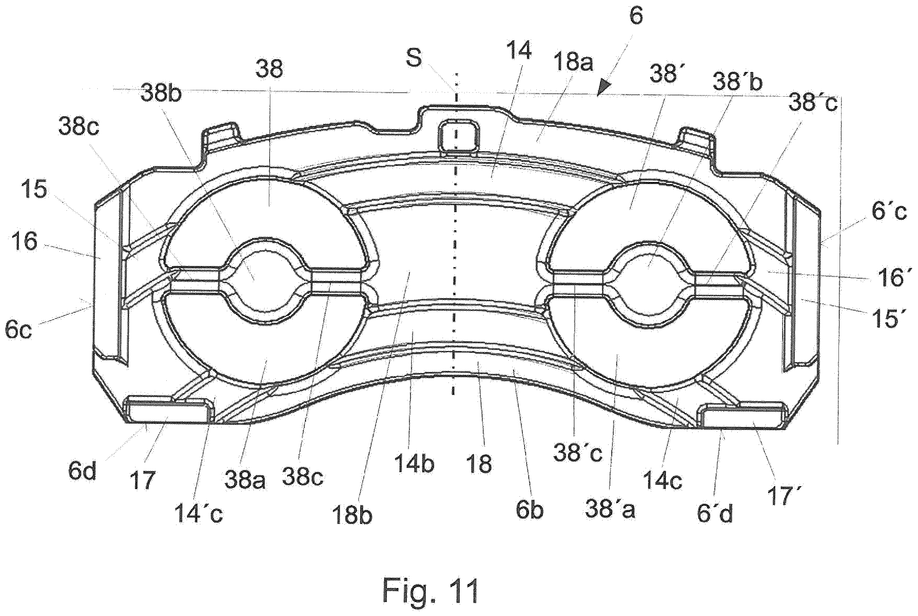

Die dritte Variante nach **Fig. 11** weist wie die Variante nach Fig. 9 obere und untere Ringsegmentdruckabschnitte 38, 38', 38a, 38'a auf, welche durch zwei Stegabschnitte 14, 14b untereinander verbunden sind. Im Unterschied dazu sind die beiden Stegabschnitte jedoch breiter, etwa fast so breit wie die Breite der Ringsegmentdruckabschnitte 38, 38', 38a, 38'a.

Der obere Stegabschnitt 14 verläuft hier zwischen den beiden oberen Ringsegmentdruckabschnitten 38, 38' im Wesentlichen konzentrisch zu dem Randbogen der Belagrückenplatte 6 unterhalb der nicht näher bezeichneten Öffnung der Belagrückenplatte 6.

Jedes Ende des oberen Stegabschnitts 38, 38' durchdringt den jeweiligen oberen Ringsegmentdruckabschnitt 38, 38' und verlässt diesen an der Außenseite, um jeweils als ein Versteifungsabschnitt 15, 15' den jeweiligen oberen Ringsegmentdruckabschnitt 38, 38' mit dem zugehörigen Anlageleistenabschnitt 16, 16' in dessen Mitte zu verbinden.

Der untere Stegabschnitt 14b ist ebenfalls gebogen und konzentrisch zu der konvexen Ausnehmung an der Unterseite der Belagrückenplatte 6. Der untere Stegabschnitt 14b verläuft zwischen den unteren Ringsegmentdruckabschnitten 38a, 38'a, verbindet diese, durchdringt diese und tritt mit seinem jeweiligen Ende im weiteren Verlauf seines Bogens wieder als ein jeweiliger Stegabschnitt 14c, 14'c hervor, der den jeweiligen unteren Ringsegmentabschnitt 38a, 38'a mit dem zugehörigen Auflageleistenabschnitt 17, 17' verbindet.

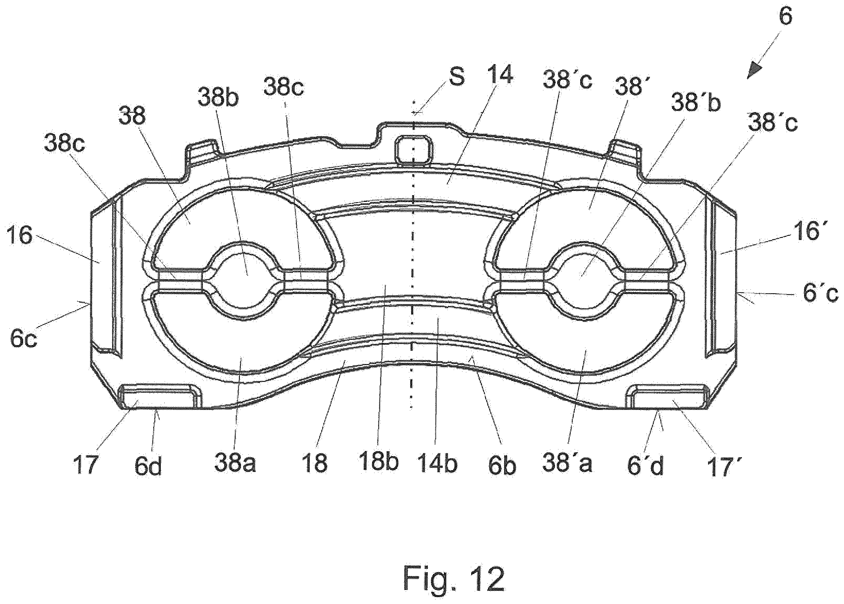

Fig. 12 stellt eine vierte Variante dar, welche der dritten Variante nach Fig. 9 bis auf die fehlenden Versteifungsabschnitte 15, 15' und Stegabschnitte 14c, 14'c entspricht.

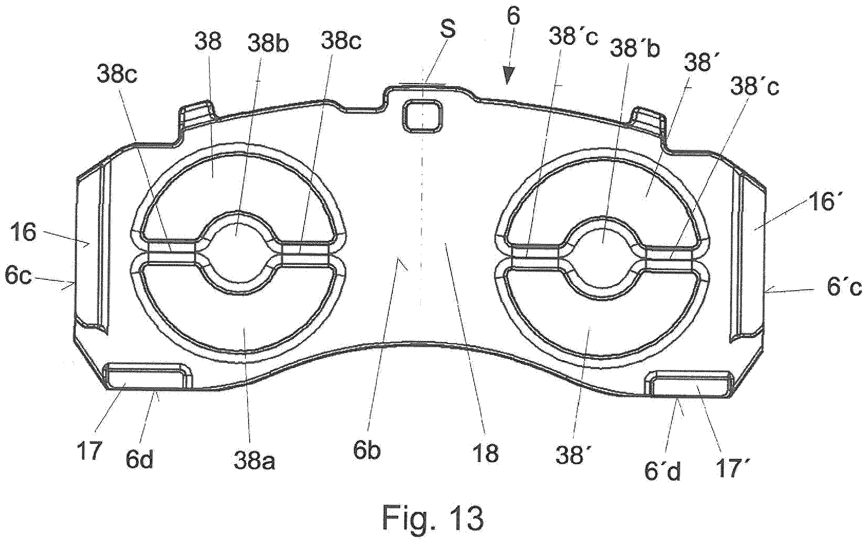

In **Fig. 13** ist eine fünfte Variante dargestellt, welche der vierten Variante nach Fig. 10 bis auf die fehlenden Stegabschnitte 14, 14b entspricht.

Die Dimensionierung und Formung der Stegabschnitte 14, 14'..., 39, 39', 39a, 39'a, der Verbindungsbereiche zwischen diesen und den Druckabschnitten 13, 13' bzw. Ringsegmentdruckabschnitten 31-37, der Versteifungsabschnitte 15, 15', der Anlageleistenabschnitte 16, 16' und der Auflageleistenabschnitte 17, 17' sind entsprechend der auftretenden Kräfte belastungs- und/oder geräuschoptimiert geformt. Dazu dienen Messergebnisse, aus welchen Kraftverläufe und/oder Anregungsfrequenzen ermittelt werden können.

Mit der oben beschriebenen Belagrückenplatte 6 ist es möglich, einen gewichtsreduzierten zuspannseitigen Bremsbelag 12a zu erzielen, der in unterschiedlichen Bremsen zur Anwendung kommen, wie die folgende Tabelle zeigt.

**Tabelle 1: Belagrückenplatte Gewicht und Einsatz**

| Gewicht | Fläche | Bremsmoment | Vollfläche |
|---|---|---|---|
| [g] | [cm²] | [kNm] | [cm²] |
| 1050 | 189 | 30 | 196 |
| 950 | 142,5 | 19 | 148 |
| 900 | 115 | 13 | 119 |
| 1000 | 164 | 24 | 173 |
| 1000 | 161 | 20 | 168 |
| 1200 | 200,7 | 30 | 208 |
| 1000 | 154-161 | 19 | 171 |

Der Begriff "Vollfläche" im Rahmen der vorliegenden Erfindung definiert eine Fläche im Verschleißzustand. Im Verschleißzustand weist die Reibmasse nur noch eine Belagdicke von 2 mm auf.

Die in der Tabelle aufgeführte "Fläche" bezieht sich auf eine Fläche bei mittlerem Verschleiß, also wenn der Belag zur Hälfte verschlissen ist.

Durch die oben beschriebenen Ausführungsbeispiele wird die Erfindung nicht eingeschränkt, sondern sie ist im Rahmen der beigefügten Ansprüche modifizierbar.

So ist es zum Beispiel denkbar, dass die Auflageleistenabschnitte 17, 17' auch mit den Druckabschnitten 13, 13' über entsprechende Versteifungssteg oder -rippen verbunden sind.

Aus dem Kontext der vorliegenden Erfindung versteht sich, dass die Belagrückenplatte 60 mit der Reibmasse 50 des Bremsbelags 12b vorzugsweise analog zur Belagrückenplatte 6 mit der Reibmasse 5 des Bremsbelages 12a ausgebildet sein kann, so dass sich insbesondere die durch die Strukturanordnung hervorgerufenen Gewichtsvorteile des Bremsbelags 12a auch für den Bremsbelag 12b ergeben.

Nachfolgend werden weitere vorteilhafte Ausführungsvarianten unter Bezugnahme auf die Figuren genannt:
Die Strukturelemente können als die Ausnehmungen 21b, 21"b ausgebildet sein, wobei die Ausnehmungen die Erhebungen 22, 22', 22" aufweisen, welche in einer Draufsicht senkrecht zur Ebene A der Oberfläche 26 der Belagrückenplatte zwischen 15 bis 50 %, insbesondere zwischen 20% und 30%, der Fläche der Ausnehmung 21b einnehmen.

Die Ausnehmung 21b, 21"b können eine maximale Tiefe 43 aufweisen, mit welcher sie gegenüber der Ebene A der Oberfläche 26 abgesenkt ist, wobei maximale Tiefe 43 zwischen 20 bis 60%, insbesondere 30 bis 50 %, der Dicke 40 der Belagrückenscheibe 6 beträgt.

Die Erhebungen 22, 22' können eine Höhe 70 aufweisen mit welcher sie aus der Bodenfläche 21c der Ausnehmung 21b, vorzugsweise senkrecht, hervorstehen, wobei die Höhe 70)zwischen 80% bis 180%, insbesondere zwischen 120 % bis 165%, der Tiefe 43 beträgt.

Zumindest 50% der Stege 28, 28' können entlang eines Abschnitts von zumindest 50% ihrer Haupterstreckungsrichtung eine Breite 80 aufweisen, welche zwischen 70-130% der Tiefe 43 der Ausnehmung 21b beträgt.

Die Länge 90 von zumindest 50% aller Stege 28, 28' kann entlang ihrer Haupterstreckungsrichtung zwischen dem 120% und 300% der Dicke 40 der Belagrückenplatte betragen.

Zumindest 50% aller Stege können eine einheitliche Länge 90 aufweisen.

Die Erhebungen 22, 22', 22" können mit einem Mindest-Abstand 95 von einem die Ausnehmung 21b, 21'b, 21"b) begrenzenden Rand 21a, 21"a beabstandet sein.

Der Stegabschnitt 14 kann als erster Stegabschnitt zwischen den Druckabschnitten 13, 13' verlaufen mit einer Stegbreite 14a, welche zwischen 40-55% eines Außenradius eines der Druckabschnitte 13, 13' beträgt.

Ein zweiter Stegabschnitt 114 kann zwischen den Druckabschnitten 13, 13' verlaufen und spiegelsymmetrisch zum ersten Stegabschnitt 14, bezogen auf eine gedachte Mittelachse M, angeordnet sein.

Der zweite Stegabschnitt 114 kann eine Breite von zumindest 90%, vorzugsweise zwischen 95 bis 105%, des ersten Stegabschnitts 14 aufweisen.

Die Oberfläche 26 der Belagseite der Bremsbelagrückenplatte 6 kann als ein um die Strukturordnung umlaufender Randbereich 66 ausbildet sein.

Der Randbereich 66 kann an allen Abschnitten eine Breite von zumindest 3 mm, vorzugsweise 4-12 mm, aufweisen.

Zumindest eine Erhebung 22, 22', 22", insbesondere zumindest 50% aller Erhebungen 22, 22', 22", der Strukturanordnung kann jeweils zumindest eine Vertiefung 22a, insbesondere eine zentrisch in der Erhebung 22, 22', 22" angeordnete Vertiefung, aufweisen.

Die Erhebungen 22, 22', 22" können zumindest zwei unterschiedliche geometrische Formen und/oder Dimensionierungen aufweisen.

Jede Erhebung kann die geometrische Form der jeweiligen Ausnehmung 21b, 21'b, 21"b aufweisen, in welcher die Erhebung 22, 22', 22" angeordnet ist, vorzugsweise derart, dass die Erhebung 22, 22', 22" in einem gleichbleibenden Abstand vom Rand 21a, 21'a, 21"a der Ausnehmung 21b, 21'b, 21"b beabstandet ist.

In jeder Ausnehmungen 21b, 21'b, 21"b können maximal zwei Erhebungen 22, 22', 22" angeordnet sein.

Die Ausnehmungen 21b, 21'b, 21"b können weniger als 85% %, vorzugsweise zwischen 55 - 80%, insbesondere zwischen 70-78% der Fläche der Strukturanordnung 20 in der Draufsicht auf die Belagseite 6a einnehmen.

Die Ausnehmungen 21b, 21'b, 21"b können weniger als 90%, vorzugsweise zwischen 70 - 88%, insbesondere zwischen 80-85% der Fläche der Belagrückenplatte 6, 60 in der Draufsicht auf die Belagseite 6a einnehmen.

Die Strukturanordnung 20 kann mehr als 65%, vorzugsweise zwischen 68% bis 75% der Fläche der Belagrückenplatte 6, 60 in der Draufsicht auf die Belagseite 6a einnehmen.

Der Bremsbelagsatz 12 kann mindestens einen zuspannseitigen Bremsbelag 12a und mindestens einen rückenseitigen Bremsbelag 12b umfassen, wobei der zuspannseitige Bremsbelag 12a als erfindungsgemäßer Bremsbelag ausgebildet ist.

Beide Bremsbeläge 12a, 12b können in erfindungsgemäßer Weise ausgebildet sein.

### Bezugszeichenliste

- 1: Scheibenbremse
- 2: Bremsscheibe
- 2a: Bremsscheibendrehachse
- 3: Bremsträger
- 3a, 3'a: Bremsträgerhorn
- 4: Bremssattel
- 5, 50: Reibmasse
- 6,60: Belagrückenplatte
- 6a: Belagseite
- 6b: Zuspannseite
- 6c, 6'c: Anlagefläche
- 6d, 6'c: Auflagefläche
- 6e: Auflagefläche
- 6f-i: Seitenfläche
- 7, 7': Druckstück
- 8, 8': Bremsstempel
- 9: Traverse
- 10: Bremsdrehhebel
- 11: Zuspanneinrichtung
- 12: Bremsbelagsatz
- 12a, 12b: Bremsbelag
- 13, 13': Druckabschnitt
- 13a, 13'a: Ausnehmung
- 13b, 13'b: Ringbreite
- 14, 14b, 14c, 14'c: Stegabschnitt
- 14a: Steg breite
- 15, 15': Versteifungsabschnitt
- 16, 16': Anlageleistenabschnitt
- 17, 17': Auflageleistenabschnitt
- 18: Oberfläche
- 18a, 18b: Oberflächenabschnitt
- 19, 19': Anlagebereich
- 19a, 19'a: Auflagebereich
- 20: Strukturanordnung
- 21, 21': Strukturelement
- 21a, 21'a: Rand
- 21b, 21'b: Ausnehmung
- 21c: Bodenfläche der Ausnehmung
- 22, 22': Erhebung
- 22a, 22'a: Vertiefung
- 23, 24, 25, 25a: Randabschnitt
- 26: Oberfläche
- 27, 27': Versteifungsabschnitt
- 27a-27d, 27'a-27'd: Stegversteifungsabschnit
- 28, 28': Steg
- 28a, 28c: Ringstegabschnitt
- 28b, 28b1: Speichenstegabschnitt
- 29, 29a,29', 29'a: Strukturelement
- 30: Wabenstrukturelement
- 31, 31', 31a, 31'a,: Ringsegmentstrukturelement
- 32, 32', 32a, 32'a, 33, 33',:
- 34, 34', 34a, 34'a 35, 35': Ringstrukturelement
- 36, 36', 37, 37': Strukturelement
- 38, 38', 38a, 38'a: Ringsegmentdruckabschnitt
- 38b, 38'b, 38c, 38'c: Vertiefung
- 39, 39', 39a, 39b: Stegabschnitt
- 40: Dicke
- 41: Höhe
- 42: Überstand
- 43: Tiefe
- 50: Reibmasse
- 55: Lager
- 60: Belagrückenplatte
- 65: Abrundung
- 66: Randbereich
- 70: Höhe
- 80: Breite eines Steges
- 90: Länge eines Steges
- 114: Stegabschnitt
- R1, R2: Reihe
- S: Achse
- A: Ebene der Oberfläche
- M: Mittellinie

## Patentansprüche

1. Bremsbelag (12a, 12b) für eine Scheibenbremse (1) für ein Kraftfahrzeug, insbesondere für ein Nutzfahrzeug, mit einer Belagrückenplatte (6, 60), die eine Belagseite (6a) mit einer Reibmasse (5, 50) und eine der Belagseite (6a) gegenüberliegende Zuspannseite (6b) aufweist, wobei die Belagseite (6a) mit einer Strukturanordnung (20) mit einer Mehrzahl an Ausnehmungen (21b, 21'b, 21"b) mit darin angeordneten Erhebungen (22, 22', 22") versehen ist, wobei die Strukturanordnung (20) der Belagseite (6a) in Form und Größe unterschiedliche Strukturelemente (21, 29-37) umfasst, **dadurch gekennzeichnet, dass** eine erste Gruppe von Strukturelementen (21, 29-30) der in Form und Größe unterschiedlichen Strukturelemente (21, 29-37) der Strukturanordnung (20) in zwei geraden Reihen (R1, R2), welche parallel zu einer Längsrichtung der Belagrückenplatte (6) verlaufen, und in einer um diese Reihen (R1, R2) umlaufenden Anordnung angeordnet sind, wobei die eine Reihe (R1) drei sechseckförmige Wabenstrukturelemente (30, 30') nebeneinander aufweist, wobei in der darunter liegenden Reihe (R2) zumindest zwei weitere Wabenstrukturelemente (30, 30') so angeordnet sind, dass sich eine Art Wabenstruktur ergibt.

2. Bremsbelag (12a, 12b) nach Anspruch 1, **dadurch gekennzeichnet, dass** die Strukturelemente (21, 29-30) in den zwei geraden Reihen (R1, R2) und in der um diese Reihen (R1, R2) umlaufenden Anordnung in einer zu einer Achse (S), die senkrecht zu der Längsrichtung der Belagrückenplatte (6) verläuft, symmetrischen Anordnung angeordnet sind.

3. Bremsbelag (12a, 12b) nach Anspruch 2, **dadurch gekennzeichnet, dass** die Strukturelemente (31-34; 31'-34') in zwei Gruppen, die symmetrisch zu einer Achse (S), die senkrecht zu der Längsrichtung der Belagrückenplatte (6) verläuft, auf der Belagseite (6a) der Belagrückenplatte (6) angeordnet sind.

4. Bremsbelag (12a, 12b) nach Anspruch 3, **dadurch gekennzeichnet, dass** zusätzlich zur ersten Gruppe weitere Gruppen oder einzelne Strukturelemente (29, 29', 29a, 29'a, 36, 36', 37, 37') der in Form und Größe unterschiedlichen Strukturelemente (21, 29-37) der Strukturanordnung (20) in Randbereichen, in der Mitte und in Auflagerbereichen der Belagrückenplatte (6, 60) vorgesehen sind.

5. Bremsbelag (12a, 12b) nach einem der vorhergehenden Ansprüche, **dadurch gekennzeichnet, dass** die Strukturanordnung (20) weiterhin Strukturelemente (21, 29-30) der in Form und Größe unterschiedliche Strukturelemente (21, 29-37) mit fünfeckigen, viereckigen und/oder dreieckigen Formen mit abgerundeten Ecken aufweist, wobei Anzahl an Strukturelemente bevorzugt mehr als 8 pro 100 cm² Reibfläche, besonders bevorzugt mehr als 10, betragen.

6. Bremsbelag (12a, 12b) nach einem der vorhergehenden Ansprüche, **dadurch gekennzeichnet, dass** die Erhebungen (22, 22'. 22") kreisrund, oval oder/und mehreckig, z.B. dreieckig, ausgebildet sind und vorzugsweise Vertiefungen (22a, 22'a) aufweisen, wobei die Erhebungen (22, 22') bevorzugt bis zur Höhe eines jeweiligen Rands (21a) von einem Boden einer jeweiligen Ausnehmung (21b) oder/und über den jeweiligen Rand (21a) hinaus hervorstehen.

7. Bremsbelag (12a, 12b) nach einem der vorhergehenden Ansprüche, **dadurch gekennzeichnet, dass** die Zuspannseite (6b) der Belagrückenplatte (6) hervorstehende Druckabschnitte (13, 13') aufweist, wobei die von der Zuspannseite (6b) hervorstehenden Druckabschnitte (13, 13') bevorzugt durch zumindest einen Stegabschnitt (14, 14b) verbunden sind und wobei der zumindest eine Stegabschnitt (14, 14b) besonders bevorzugt geradlinig und parallel zu einer Längsrichtung der Belagrückenplatte (6) verläuft und wobei die Druckabschnitte (13, 13') am Meisten bevorzugt kreisringförmig mit einer Ausnehmung (13a, 13'a) ausgebildet sind.

8. Bremsbelag (12a, 12b) nach Anspruch 7, **dadurch gekennzeichnet, dass** die Druckabschnitte (13, 13') jeweils in zwei halbkreisförmige Ringsegmentdruckabschnitte (38, 38a; 38', 38'a) aufgeteilt sind, in deren Mitte jeweils eine kreisförmige Vertiefung (38b, 38'b) eingeformt ist, welche beidseitig jeweils mit einer geradlinigen Vertiefung (38c, 38'c) zwischen den zugehörigen Ringsegmentdruckabschnitten (38, 38a; 38', 38'a) kommuniziert, wobei die geradlinigen Vertiefungen (38c, 38'c) besonders bevorzugt in einer gedachten geraden Verbindungslinie in Längsrichtung der Belagrückenplatte (6) durch Mittelpunkte der Ringsegmentdruckabschnitte (38, 38a; 38', 38'a) verlaufen.

9. Bremsbelag (12a, 12b) nach einem der Ansprüche 7 bis 8, **dadurch gekennzeichnet, dass** die Zuspannseite (6b) Anlageleistenabschnitte (16, 16') und Auflageleistenabschnitte (17, 17') aufweist, wobei die Anlageleistenabschnitte (16, 16') besonders bevorzugt mit den Druckabschnitten (13, 13') oder den Ringsegmentdruckabschnitte (38, 38a; 38', 38'a) verbunden sind.

10. Bremsbelag (12a, 12b) nach einem der vorhergehenden Ansprüche, **dadurch gekennzeichnet, dass** die Belagrückenplatte (6) einstückig, insbesondere monolithisch, aus einem metallischen Guss hergestellt ist.

11. Bremsbelag nach einem der vorhergehenden Ansprüche, **dadurch gekennzeichnet, dass** x die Tiefe (70) einer Ausnehmung (21b, 21b', 21"b) der Strukturanordnung (20), vorzugsweise aller Ausnehmung (21b, 21'b, 21"b) der Strukturanordnung (20), und y die Dicke (40) der Belagrückenplatte,ist wobei das Verhältnis x/y zumindest 0,25, vorzugsweise zwischen 0,3 bis 0,6, beträgt.

12. Bremsbelag nach einem der vorhergehenden Ansprüche, **dadurch gekennzeichnet, dass** die Strukturanordnung Stege aufweist, wobei die Breite (80) von zumindest 50% aller Stege der Strukturanordnung, insbesondere von zumindest 50% aller Stege mit einheitlicher Länge (90), zumindest 1,8 mm, vorzugsweise 2-4 mm beträgt und/oder dass die Länge (90) von zumindest 50% aller Stege (28, 28') der Strukturanordnung, insbesondere von zumindest 50% aller Stege der Strukturanordnung mit einheitlicher Breite (80), zumindest 7 mm, vorzugsweise 8-17 mm beträgt.

13. Bremsbelag (12a, 12b) für eine Scheibenbremse (1) für ein Kraftfahrzeug, insbesondere für ein Nutzfahrzeug, nach Anspruch 1, mit einer Belagrückenplatte (6, 60), die eine Belagseite (6a) mit einer Reibmasse (5, 50) und eine der Belagseite (6a) gegenüberliegende Zuspannseite (6b) aufweist, wobei die Belagseite (6a) mit einer Strukturanordnung (20) mit Ausnehmungen (21b, 21'b) und Erhebungen (22, 22') versehen ist, zur formschlüssigen Verbindung mit dem Reibmaterial und wobei der Bremsbelag (12a, 12b) ausgelegt ist für Scheibenbremsen mit einem Bremsmoment von maximal 30 kNm und mit einer Reibfläche des Bremsbelags von mehr als 180 cm², insbesondere 189 cm², und ein Gewicht der Belagrückenplatte (6, 60) von weniger als 1100 g, insbesondere von 1050 g, aufweist
oder
wobei der Bremsbelag (12a, 12b) ausgelegt ist für Scheibenbremsen mit einem Bremsmoment von maximal 24 kNm und mit einer Reibfläche des Bremsbelags von mehr als 160 cm² ,insbesondere 164 cm², und ein Gewicht der Belagrückenplatte (6, 60) von weniger als 1050 g, insbesondere 1000 g, aufweist;
oder
wobei der Bremsbelag (12a, 12b) ausgelegt ist für Scheibenbremsen mit einem Bremsmoment von maximal 20 kNm und mit einer Reibfläche des Bremsbelags von mehr als 155 cm²,insbesondere 161 cm², und ein Gewicht der Belagrückenplatte (6, 60) von weniger als 1050 g, insbesondere 1000 g, aufweist; oder
wobei der Bremsbelag (12a, 12b) ausgelegt ist für Scheibenbremsen mit einem Bremsmoment von maximal 19 kNm und mit einer Reibfläche des Bremsbelags von mehr als 150 cm² ,insbesondere 154-161 cm², und ein Gewicht der Belagrückenplatte (6, 60) von weniger als 1050 g, insbesondere 1000 g, aufweist; oder
wobei der Bremsbelag (12a, 12b) ausgelegt ist für Scheibenbremsen mit einem Bremsmoment von maximal 19 kNm und mit einer Reibfläche des Bremsbelags von mehr als 140 cm², insbesondere 142,5 cm², und ein Gewicht der Belagrückenplatte (6, 60) von weniger als 1000 g, insbesondere 950 g, aufweist; oder
wobei der Bremsbelag (12a, 12b) ausgelegt ist für Scheibenbremsen mit einem Bremsmoment von maximal 13 kNm und mit einer Reibfläche des Bremsbelags von mehr als 110 cm², insbesondere 115 cm², und ein Gewicht der Belagrückenplatte (6, 60) von weniger als 950 g, insbesondere 900 g, aufweist; oder
wobei der Bremsbelag (12a, 12b) ausgelegt ist für Scheibenbremsen mit einem Bremsmoment von maximal 30 kNm und mit einer Reibfläche des Bremsbelags von mehr als 185 cm², insbesondere 200,7 cm², und ein Gewicht der Belagrückenplatte (6, 60) von weniger als 1250 g, insbesondere 1200 g, aufweist.

14. Bremsbelagsatz (12) für eine Scheibenbremse (1) für ein Fahrzeug, insbesondere für ein Nutzfahrzeug, **dadurch gekennzeichnet, dass** der Bremsbelagsatz (12) mindestens einen zuspannseitigen Bremsbelag (12a) und mindestens einen rückenseitigen Bremsbelag (12b) umfasst, wobei der zuspannseitige Bremsbelag (12a) nach einem der vorhergehenden Ansprüche ausgebildet ist.

15. Verwendung des Bremsbelags nach einem der vorhergehenden Ansprüche und/oder eines Bremsbelagsatzes nach einem der vorherigen Ansprüche in einem Nutzfahrzeug, insbesondere einen Lastkraftwagen, einem Nutzfahrzeug zum Personentransport, einem Nutzfahrzeug für Einsatzkräfte, Gabelstapler, Muldenkipper und/oder einem Traktor.

## Claims

1. A brake pad (12a, 12b) for a disc brake (1) for a motor vehicle, in particular for a utility vehicle, having a pad backplate (6, 60) that comprises a pad side (6a) with a frictional mass (5, 50) and an application side (6b) opposite the pad side (6a), the pad side (6a) being provided with a structural arrangement (20) having a plurality of recesses (21b, 21'b, 21"b) in which elevations (22, 22', 22") are arranged, the structural arrangement (20) of the pad side (6a) comprising differently sized and shaped structural elements (21, 29-37), **characterised in that** a first group of structural elements (21, 29-30) of the differently sized and shaped structural elements (21, 29-37) in the structural arrangement (20) are arranged in two straight rows (R1, R2) that run parallel to a longitudinal direction of the pad backplate (6), and in a configuration running around these rows (R1, R2), one row (R1) having three hexagonal honeycomb structural elements (30, 30') next to one another, there being at least two further honeycomb structural elements (30, 30') arranged in the row beneath (R2) so as to create a type of honeycomb structure.

2. A brake pad (12a, 12b) according to claim 1, **characterised in that** the structural elements (21, 29-30) in the two straight rows (R1, R2) and in the configuration running around these rows (R1, R2) are arranged in a configuration that is symmetrical to an axis (S) that runs perpendicular to the longitudinal direction of the pad backplate (6).

3. A brake pad (12a, 12b) according to claim 2, **characterised in that** the structural elements (31-34; 31'-34') are arranged on the pad side (6a) of the pad backplate (6) in two groups that are symmetrical to an axis (S) that runs perpendicular to the longitudinal direction of the pad backplate (6).

4. A brake pad (12a, 12b) according to claim 3, **characterised in that,** in addition to the first group, further groups or individual structural elements (29, 29', 29a, 29a', 36, 36', 37, 37') of the differently sized and shaped structural elements (21, 29-37) in the structural arrangement (20) are provided in edge regions, in the centre and in supporting regions of the pad backplate (6, 60).

5. A brake pad (12a, 12b) according to any one of the preceding claims, **characterised in that** the structural arrangement (20) also has structural elements (21, 29-30) of the differently sized and shaped structural elements (21, 29-37) with pentagonal, rectangular and/or triangular shapes with rounded edges, the number of structural elements preferably being more than 8 per 100cm², particularly preferably more than 10.

6. A brake pad (12a, 12b) according to any one of the preceding claims, **characterised in that** the elevations (22, 22', 22") are of circular, oval or/and polygonal, e.g. triangular, design, and preferably have depressions (22a, 22'a), the elevations (22, 22') projecting from a base of a recess (21b) preferably as far as the height of an edge (21a) and/or beyond the edge (21a).

7. A brake pad (12a, 12b) according to any one of the preceding claims, **characterised in that** the application side (6b) of the pad backplate (6) has projecting pressure portions (13, 13'), the pressure portions (13, 13') projecting from the application side (6b) being connected preferably by at least one web portion (14, 14b), the at least one web portion (14, 14b) running particularly preferably rectilinearly and parallel to a longitudinal direction of the pad backplate (6), and the projecting pressure portions (13, 13') mostly being preferably of circular ring-shaped design with a recess (13a, 13a').

8. A brake pad (12a, 12b) according to claim 7, **characterised in that** the pressure portions (13, 13') are each divided into two semi-circular annular segment pressure portions (38, 38a; 38', 38'a), in the centre of each of which is formed a circular depression (38b, 38'b) that communicates on either side with a rectilinear depression (38c, 38'c) between the associated annular segment pressure portions (38, 38a; 38', 38'a), the rectilinear depressions (38c, 38'c) particularly preferably running in a notional straight connecting line in the longitudinal direction of the pad backplate (6) through centre points of the annular segment pressure portions (38, 38a; 38', 38'a).

9. A brake pad (12a, 12b) according to any one of claims 7 to 8, **characterised in that** the application side (6b) has contact strip portions (16, 16') and support strip portions (17, 17'), the contact strip portions (16, 16') being particularly preferably connected to the pressure portions (13, 13') or to the annular segment pressure portions (38, 38a; 38', 38'a).

10. A brake pad (12a, 12b) according to any one of the preceding claims, **characterised in that** the pad backplate (6) is produced in one piece, in particular monolithically, from a metallic casting.

11. A brake pad (12a, 12b) according to any one of the preceding claims, **characterised in that x** is the depth (70) of a recess (21b, 21b', 21"b) in the structural arrangement (20), preferably of all of the recesses (21b, 21'b, 21"b) in the structural arrangement (20), and y is the thickness (40) of the pad backplate, the ratio x/y being at least 0.25, preferably between 0.3 and 0.6.

12. A brake pad (12a, 12b) according to any one of the preceding claims, **characterised in that** the structural arrangement has webs, the width (80) of at least 50% of all the webs of the structural arrangement, in particular of at least 50% of all the webs with a uniform length (90), being at least 1.8 mm, preferably 2-4 mm, and/or that the length (90) of at least 50% of all the webs (28, 28') of the structural arrangement, in particular of at least 50% of all the webs of the structural arrangement with a uninform width (80), being at least 7mm, preferably 8-17mm.

13. A brake pad (12a, 12b) for a disc brake (1) for a motor vehicle, in particular for a utility vehicle, according to claim 1, having a pad backplate (6, 60) that comprises a pad side (6a) with a frictional mass (5, 50) and an application side (6b) opposite the pad side (6a), the pad side (6a) being provided with a structural arrangement (20) having recesses (21b, 21'b) and elevations (22, 22') to create a form-fitting connection to the frictional material, and the brake pad (12a, 12b) being designed for disc brakes with a braking torque of no more than 30 kNm and with a frictional surface of the brake pad of more than 180cm², in particular 189cm², and a weight of the pad backplate (6, 60) of less than 1100 g, in particular 1050 g,
or
the brake pad (12a, 12b) being designed for disc brakes with a braking torque of no more than 24 kNm and with a frictional surface of the brake pad of more than 160cm², in particular 164cm², and a weight of the pad backplate (6, 60) of less than 1050 g, in particular 1000 g,
or
the brake pad (12a, 12b) being designed for disc brakes with a braking torque of no more than 20 kNm and with a frictional surface of the brake pad of more than 155cm², in particular 161cm², and a weight of the pad backplate (6, 60) of less than 1050 g, in particular 1000 g,
or
the brake pad (12a, 12b) being designed for disc brakes with a braking torque of no more than 19 kNm and with a frictional surface of the brake pad of more than 150cm², in particular 154-161cm², and a weight of the pad backplate (6, 60) of less than 1050 g, in particular 1000 g,
or
the brake pad (12a, 12b) being designed for disc brakes with a braking torque of no more than 19 kNm and with a frictional surface of the brake pad of more than 140cm², in particular 142.5cm², and a weight of the pad backplate (6, 60) of less than 1000 g, in particular 950 g,
or
the brake pad (12a, 12b) being designed for disc brakes with a braking torque of no more than 13 kNm and with a frictional surface of the brake pad of more than 110cm², in particular 115cm², and a weight of the pad backplate (6, 60) of less than 950 g, in particular 900 g,
or
the brake pad (12a, 12b) being designed for disc brakes with a braking torque of no more than 30 kNm and with a frictional surface of the brake pad of more than 185cm², in particular 200.7cm², and a weight of the pad backplate (6, 60) of less than 1250 g, in particular 1200 g.

14. A brake pad set (12) for a disc brake (1) for a vehicle, in particular for a utility vehicle, **characterised in that** the brake pad set (12) comprises at least one application-side brake pad (12a) and at least one rear-side brake pad (12b), the application-side brake pad (12a) being designed according to any one of the preceding claims.

15. The use of a brake pad according to any one of the preceding claims and/or of a brake pad set according to any one of the preceding claims in a utility vehicle, in particular a heavy goods vehicle, a utility vehicle for transporting people, a utility vehicle for emergency personnel, forklift trucks, dumper trucks and/or a tractor.

## Revendications

1. Garniture (12a, 12b) de frein d'un frein (1) à disque d'un véhicule automobile, notamment d'un véhicule utilitaire, comprenant une plaque (6, 60) arrière de garniture, qui a une face (6a) de garniture ayant une masselotte (5, 50) de friction et une face (6b) de serrage opposée à la face (6a) de garniture, la face (6a) de garniture étant pourvue d'un agencement (20) de structure ayant une pluralité d'évidements (21b, 21'b, 21"b) avec des saillies (22, 22', 22"), qui y sont disposées, l'agencement (20) de structure de la face (6a) de garniture comprenant des éléments (21, 29 à 37) de structure différents en forme et dimension,
**caractérisée en ce qu'**un premier groupe d'éléments (21, 29 à 30) de structure des éléments (21, 29 à 37) de structure différents en forme et dimension de l'agencement (20) de structure sont disposés suivant deux rangées droites, qui s'étendent parallèlement à une direction longitudinale de la plaque (6) arrière de garniture, et dans un agencement s'étendant autour de ces rangées (R1, R2),
dans laquelle la une rangée (1) a trois éléments (30, 30') de structure en nid d'abeille hexagonaux, les uns à côté des autres, dans laquelle, dans la rangée (R2), se trouvant en-dessous, sont disposés au moins deux autres éléments (30, 30') de structure en nid d'abeille, de manière à donner une sorte de structure en nid d'abeille.

2. Garniture (12a, 12b) de frein suivant la revendication 1, **caractérisée en ce que** les éléments (21, 29 à 30) de structure sont disposés dans les deux rangées (R1, R2) droites et dans l'agencement entourant ces rangées (R1, R2) suivant un agencement symétrique par rapport à un axe (S), qui s'étend perpendiculairement à la direction longitudinale de la plaque (6) arrière de garniture.

3. Garniture (12a, 12b) de frein suivant la revendication 2, **caractérisée en ce que** les éléments (31 à 34 ; 31' à 34') de structure sont disposés, sur la face (6a) de garniture de la plaque (6) arrière de garniture, en deux groupes, symétriquement par rapport à un axe (S), qui s'étend perpendiculairement à la direction longitudinale de la plaque (6) arrière de garniture.

4. Garniture (12a, 12b) de frein suivant la revendication 3, **caractérisée en ce qu'**en plus du premier groupe, il est prévu d'autres groupes ou divers éléments (29 ; 29', 29a, 29'a, 36, 36', 37, 37') de structure des éléments (21, 29 à 37) de structure différents en forme et dimension de l'agencement (20) de structure dans des parties de bord, au milieu et dans des parties de support de la plaque (6, 60) arrière de garniture.

5. Garniture (12a, 12b) de frein suivant l'une des revendications précédentes, **caractérisée en ce que** l'agencement (20) de structure a d'autres éléments (21, 29 à 30) de structure des éléments (21, 29 à 37) de structure différents en forme et dimension, pentagonaux, rectangulaires et/ou triangulaires à sommets arrondis, le nombre d'éléments de structure étant de préférence de plus de 8 par cm² de surface de friction, d'une manière particulièrement préférée, de plus de 10.

6. Garniture (12a, 12b) de frein suivant l'une des revendications précédentes, **caractérisée en ce que** les saillies (22, 22', 22") sont circulaires, ovales ou/et polygonales, par exemple triangulaires, et ont de préférence des cavités (22a, 22'a), les saillies (22, 22') faisant saillie de préférence jusqu'au niveau d'un bord (21a) respectif d'un fond d'un évidement (21b) respectif ou/et au-delà du bord(21a) respectif.

7. Garniture (12a, 12b) de frein suivant l'une des revendications précédentes, **caractérisée en ce que** la face (6b) de serrage de la plaque (6) arrière de garniture a des parties (13, 13') de pression en saillie, les parties (13, 13') de pression en saillie de la face (6b) de serrage étant reliées de préférence par au moins une partie (14, 14b) d'entretoise, et dans laquelle la au moins une partie (14, 14b) d'entretoise s'étend d'une manière particulièrement préférée en ligne droite et parallèlement à une direction longitudinale de la plaque (6) arrière de garniture, et dans laquelle les parties (13, 13') de pression sont constituées, pour la plupart, de préférence en forme d'anneaux de cercle, en ayant un évidement (13a, 13'a).

8. Garniture (12a, 12b) de frein suivant la revendication 7, **caractérisée en ce que** les parties (13, 13') de pression sont subdivisées chacune en deux parties (38, 38a ; 38', 38'a) de pression en segment annulaire hémicirculaires, au milieu desquelles est formée, respectivement, une cavité (38b, 38'b) circulaire, qui communique des deux côtés, respectivement, avec une cavité (38c, 38'c) rectiligne entre les parties (38, 38a ; 38', 38'a) de pression en segment annulaire associées, les cavités (38c, 38'c) rectilignes s'étendant de manière particulièrement préférée suivant une ligne de liaison droite imaginaire dans la direction longitudinale de la plaque (6) arrière de garniture, en passant par les centres des parties (38, 38a ; 38', 38'a) de pression en segment annulaire.

9. Garniture (12a, 12b) de frein suivant l'une des revendications 7 à 8, **caractérisée en ce que** la face (6b) de serrage a des parties (16, 16') de nervure de contact et des parties (17, 17') de nervure de support, les parties (16, 16') de nervure de contact étant reliées d'une manière particulièrement préférée aux parties (13, 13') de pression ou aux parties (38, 38a ; 38', 38'a) de pression en segment annulaire.

10. Garniture (12a, 12b) de frein suivant l'une des revendications précédentes, **caractérisée en ce que** la plaque (6) arrière de garniture est fabriquée d'une seule pièce, notamment monolithiquement, en une fonte métallique.

11. Garniture de frein suivant l'une des revendications précédentes, **caractérisée en ce que**, x étant la profondeur (70) d'un évidement (21b, 21b', 21"b) de l'agencement (20) de structure, de préférence de tous les évidements (21b, 21'b, 21"b) de l'agencement (20) de structure, et y étant l'épaisseur (40) de la plaque arrière de garniture, on a le rapport x/y égal à au moins 0,25, de préférence compris entre 0,3 et 0,6.

12. Garniture de frein suivant l'une des revendications précédentes, **caractérisée en ce que** l'agencement de structure a des entretoises, la largeur (80) d'au moins 50% de toutes les entretoises de l'agencement de structure, notamment d'au moins 50% de toutes les entretoises ayant une longueur (90) uniforme, est d'au moins 1,8 mm, en allant de préférence entre 2 et 4 mm, et/ou **en ce que** la longueur (90) d'au moins 50% de toutes les entretoises (28, 28') de l'agencement de structure, notamment d'au moins 50% de toutes les entretoises de l'agencement de structure d'une largeur (80) uniforme, est d'au moins 7 mm, en allant de préférence entre 8 et 17 mm.

13. Garniture (12a, 12b) de frein d'un frein (1) à disque d'un véhicule automobile, notamment d'un véhicule utilitaire suivant la revendication 1, comprenant une plaque (6, 60) arrière de garniture, qui a une fac (6a) de garniture ayant une masselotte (5, 50) de friction, et une face (6b) de serrage opposée à la face (6a) de garniture, la face (6a) de garniture étant pourvue d'un agencement (20) de structure ayant des évidements (21b, 21'b) et des saillies (22, 22') pour la liaison à complémentarité de forme avec le matériau de friction, et dans laquelle la garniture (12a, 12b) de frein est conçue pour des freins à disque ayant un couple de freinage de 30 kNm au maximum et ayant une surface de friction de la garniture de frein de plus de 180 cm², notamment de 189 cm², et un poids de la plaque (6, 60) arrière de garniture de moins de 1100 g, notamment de 1050 g ;
ou
dans laquelle la garniture (12a, 12b) de frein est conçue pour des freins à disque ayant un couple de freinage de 24 kNm au maximum et une surface de friction de la garniture de frein de plus de 160 cm², notamment de 164 cm², et un poids de la plaque (6, 60) arrière de garniture de moins de 1050 g, notamment de 1000 g ;
ou
dans laquelle la garniture (12a, 12b) de frein est conçue pour des freins à disque ayant un couple de freinage de 20 kNm au maximum et une surface de friction de la garniture de frein de plus de 155 cm², notamment de 161 cm², et un poids de la plaque (6, 60) arrière de garniture de moins de 1050 g, notamment de 1000 g ;
ou
dans laquelle la garniture (12a, 12b) de frein est conçue pour des freins à disque ayant un couple de freinage de 19 kNm au maximum et une surface de friction de la garniture de frein de plus de 150 cm², notamment de 154 à 161 cm², et un poids de la plaque (6, 60) arrière de garniture de moins de 1050 g, notamment de 1000 g ;
ou
dans laquelle la garniture (12a, 12b) de frein est conçue pour des freins à disque ayant un couple de freinage de 19 kNm au maximum et une surface de friction de la garniture de frein de plus de 140 cm², notamment de 142,5 cm², et un poids de la plaque (6, 60) arrière de garniture de moins de 1000 g, notamment de 950 g ;
ou
dans laquelle la garniture (12a, 12b) de frein est conçue pour des freins à disque ayant un couple de freinage de 13 kNm au maximum et une surface de friction de la garniture de frein de plus de 110 cm², notamment de 115 cm², et un poids de la plaque (6, 60) arrière de garniture de moins de 950 g, notamment de 900 g ;
ou
dans laquelle la garniture (12a, 12b) de frein est conçue pour des freins à disque ayant un couple de freinage de 30 kNm au maximum et une surface de friction de la garniture de frein de plus de 185 cm², notamment de 200,7 cm², et un poids de la plaque (6, 60) arrière de garniture de moins de 1250 g, notamment de 1200 g.

14. Jeu (12) de garnitures de frein d'un frein (1) à disque d'un véhicule, notamment d'un véhicule utilitaire, **caractérisé en ce que** le jeu (12) de garnitures de frein comprend au moins une garniture (12a) de frein du côté du serrage et au moins une garniture (12b) de frein du côté arrière, la garniture (12a) de frein du côté du serrage étant constituée suivant l'une des revendications précédentes.

15. Utilisation de la garniture de frein suivant l'une des revendications précédentes et/ou d'un jeu de garnitures de frein suivant l'une des revendication précédentes dans un véhicule utilitaire, notamment dans un camion, un véhicule utilitaire pour le transport des personnes, un véhicule utilitaire pour des forces d'intervention, un chariot à fourche, un camion à benne, basculante et/ou un tracteur.
